(19) Europäisches Patentamt European Patent Office Office européen des brevets

(11) **EP 4 166 509 B1**

(12) **EUROPEAN PATENT SPECIFICATION**

(45) Date of publication and mention of the grant of the patent:
**25.02.2026 Bulletin 2026/09**

(51) International Patent Classification (IPC):
**C02F 1/00** (2023.01)   **B01J 20/02** (2006.01)
**B01J 20/20** (2006.01)   **C02F 1/28** (2023.01)
**C02F 101/34** (2006.01)

(21) Application number: **22200840.1**

(22) Date of filing: **11.10.2022**

(52) Cooperative Patent Classification (CPC):
**C02F 1/008; B01J 20/20; B01J 20/28057;**
**B01J 20/28078; B01J 20/3021; B01J 20/3078;**
**B01J 20/3204; B01J 20/3236; B01J 20/3293;**
**C02F 1/283;** B01J 2220/4825; C02F 2101/345;
C02F 2209/001; C02F 2209/006

(54) **METHOD FOR EFFICIENTLY REMOVING BISPHENOL POLLUTANTS FROM WATER BODY**

VERFAHREN ZUR EFFIZIENTEN ENTFERNUNG VON BISPHENOL-SCHADSTOFFEN AUS DEM WASSERKÖRPER

PROCÉDÉ D'ÉLIMINATION EFFICACE DE POLLUANTS BISPHÉNOLS DE CORPS AQUEUX

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.10.2021 CN 202111194892**

(43) Date of publication of application:
**19.04.2023 Bulletin 2023/16**

(73) Proprietor: **South China Institute of Enviromental Science,**
**Ministry of Ecology and Enviroment**
**Guangzhou City, Guangdong Province (CN)**

(72) Inventors:
• **Yu, Yunjiang**
  **Guangzhou City (CN)**
• **Chang, Zhaofeng**
  **Guangzhou City (CN)**
• **Zhong, Zijuan**
  **Guangzhou City (CN)**
• **Guo, Haobo**
  **Guangzhou City (CN)**
• **Xiang, Mingdeng**
  **Guangzhou City (CN)**
• **Li, Liangzhong**
  **Guangzhou City (CN)**
• **Zhu, Xiaohui**
  **Guangzhou City (CN)**

(74) Representative: **Cabinet Chaillot**
**16/20, avenue de l'Agent Sarre**
**B.P. 74**
**92703 Colombes Cedex (FR)**

(56) References cited:
**CN-A- 111 203 180    CN-A- 113 233 573**

• **BIRER AYSE MULLA ET AL: "Evaluation of sewage sludge biochar and modified derivatives as novel SPE adsorbents for monitoring of bisphenol A", CHEMOSPHERE, PERGAMON PRESS, OXFORD, GB, vol. 268, 5 November 2020 (2020-11-05), XP086484255, ISSN: 0045-6535, [retrieved on 20201105], DOI: 10.1016/ J.CHEMOSPHERE.2020.128866**

EP 4 166 509 B1

**Description**

BACKGROUND OF THE INVENTION

Technical Field

The present disclosure belongs to the technical field of wastewater treatment, and specifically relates to a method for efficiently removing bisphenol pollutants from a water body and a compound biochar material.

Description of Related Art

Bisphenols (BPs), fine chemicals with similar chemical structures, are mainly used as synthetic monomers of various polymeric materials. As crosslinking agents in rubber industry, etc. the bisphenols have been widely used in production of daily necessities, and mainly include organic pollutants such as BPA, TBBPABADGE-HCL-$H_2O$, BADGE, BADGE-HCL, BADGE-$H_2O$, BADGE-2HCL, BADGE-$2H_2O$, BFDGE, BFDGE-$2H_2O$, BFDGE-2HCL, BPA, BPF and Bis-S with different molecular weights and their derivatives. Bisphenol A (BPA) is one of the most representative compounds. In consideration of the potential health risks posed by BPA to the human body, numerous countries and regions have established regulations on its manufacture and use. Therefore, environmental behavior studies and health risk evaluation of potential alternative products of BPA is bound to be the focus of attention. In recent years, a wide range of studies have been published on the potential endocrine disrupting effects of the bisphenols. Moreover, bisphenol pollutants have been detected in widespread environmental media of soil, water, sediment, indoor dust, etc. Bisphenol A is one of the most widely used industrial compounds in the world, and is mainly used for producing polycarbonate, epoxy resin, polysulfone resin, polyphenylene ether resin, unsaturated polyester resin and other high molecular materials. It can also be used for producing fine chemical products such as plasticizers, flame retardants, antioxidants, heat stabilizers, rubber anti-aging agents, pesticides, coatings, etc. BPA is ubiquitous, from mineral water bottles, medical devices to the inside of food packaging. Every year, 27 million tons of plastic containing BPA are produced worldwide. But BPA can also cause endocrine disorders that threaten health of fetuses and children. Cancer and obesity caused by metabolic disorders are also considered to be associated with it.

Tetrabromobisphenol A, a derivative of bisphenol A, is a white powder mainly used as an additive for plastic products, and is one of the commonly used brominated flame retardants. Bisphenol A and tetrabromobisphenol A have been proved harmful to human health in various tests. On October 27, 2017, a list of carcinogens published by the International Agency for Research on Cancer of the World Health Organization is read as a preliminary reference, bisphenol A and tetrabromobisphenol A are both included in a list of Group 2A carcinogens, and both are often present in water simultaneously.

Methods for removing pollutants of bisphenols of BPA, TBBPA, etc. from wastewater mainly include a physical degradation method, a biodegradation method and a catalytic oxidation method. Existing studies have found that a porous carbon material, with a sizable specific surface area and high hydrophobicity, is considered as an excellent removal agent for hydrophobic organic pollutants. The porous carbon material is widely used in treatment of organic wastewater due to its low cost, high degradation and easy separation.

Disclosed in Chinese patent application CN 109173994 A are a method for preparing biochar by high-temperature carbonization modification of waste cigarette butts and use of biochar. The disclosure is to solve the existing technical problem of serious bisphenol A pollution and pollution caused by waste cigarette butts in a water body. The disclosure includes: 1, carbonizing a cigarette butt through a hydrothermal method; 2, performing centrifuging and drying; 3, performing high temperature pyrolysis; and 4, adding an acid, and performing suction filtration to prepare biochar. The biochar prepared in the disclosure is used as an adsorbent for removing bisphenol A from the water body. In this disclosure, biochar is prepared by using the waste cigarette butts as raw materials, which is combined with removal of BPA. The biochar obtained from the waste cigarette butt modified by means of high-temperature carbonization has little influence on the removal of BPA under different pH conditions with humic acid added, and has obvious selectivity. In addition, the biochar has targeted selectivity for BPA in actual water. Moreover, BPA adsorption performance of the biochar is significantly improved compared with commercial activated carbon, so as to provide an effective, feasible and convenient way for improving water quality.

However, the above disclosure is merely applicable to the removal of BPA from a water body, but not to removal of TBBPA and other bisphenols with different molecular weights simultaneously. Furthermore, the used preparation method for biochar and the raw materials are expensive, and are difficult to use in a wide range. In addition, the method does not provide a reliable method capable of verifying an effect of the material for pollutant removal.

Moreover, biochar materials are widely used in removal of organic pollutants. **In** order to improve the effect of the biochar for pollutant removal and improve separation of the biochar from environmental media, researchers often modify the biochar. Ball milling treatment can increase a specific surface area, pore volume, and types and content of surface functional groups of the biochar, reduce a particle size of the biochar, and endow the biochar with better suspension and dispersion ability in a liquid phase. Modification with iron oxide, for example, loading iron oxide on the biochar, can endow the biochar with a strong magnetic property, which is conducive to magnetic separation of the biochar in a complex environment. Although the modification treatment improves a certain property (such as the specific surface area) of the biochar, it will inevitably result in the decrease in other properties (such as the pore size and porosity) of the material. The desorption amount increases while the adsorption amount increases, so the comprehensive properties of the material cannot be balanced.

Most wastewater treatment technical solutions use one specific biochar material to treat one type of bisphenol component, that is, use a single material to remove one pollutant. In order to achieve effective removal of a variety of pollutants, it is necessary to separately use a variety of materials and carry out multiple application removal operations, resulting in high treatment costs and low efficiency. For treatment of a water body containing various bisphenols, it is necessary to prepare corresponding various biochar materials for various pollutants, and carry out application and multiple removal and purification operations, to treat the various bisphenols with different molecular weights in the water body, and it is impossible to use one material and one removal operation to purify the bisphenols synchronously, so the production, use and removal costs of the biochar materials increase, which will inevitably limit generalization and use of the biochar.

In addition, during the removal of bisphenol pollutants (such as BPA and TBBPA) from water by using biochar materials, only adsorption amount of the biochar is used to predict and verify removal capacity and a removal effect on the pollutants, and accuracy of a prediction and verification result is low due to coexistence of adsorption and desorption. Moreover, as there are various biochar materials, and the biochar materials have different removal effects and efficiency for different concentrations of the bisphenols of BPA, TBBPA, etc., so how to prepare a variety of materials and obtain the optimal mixing ratio becomes a technical problem. Furthermore, treatment of large-area water pollutants often consumes a large amount of biochar materials. Classified and graded treatment with the existing methods and materials limits large-scale use of the biochar materials due to the large use amount of the biochar materials and a long period. Further, relevant prior art documents are CN 113 233 573 A and BIRER AYSE MULLA ET AL: "Evaluation of sewage sludge biochar and modified derivatives as novel SPE adsorbents for monitoring of bisphenol A",CHEMOSPHERE, PERGAMON PRESS, OXFORD, GB, vol. 268, 5 November 2020.

BRIEF SUMMARY OF THE INVENTION

In view of the above defects of the prior art, the objective of the present disclosure is to provide a method for efficiently removing bisphenol pollutants from a water body. A compound material with three types of various kinds of biochar is used as a broad-spectrum removal agent for wastewater containing various bisphenol components, for example, BPA, TBBPA, etc., so as to simplify a material preparation and removal cycle of wastewater treatment and reduce a total usage amount of the materials. A new solid loading amount is used to predict, compute and verify pollutant removal capacity of the biochar, and a removal effect and efficiency of the various bisphenol components, for example, BPA and TBBPA with different concentrations in a water environment are accurately evaluated, so as to solve the problem that since adsorption and desorption coexist in the removal process of the pollutants by the biochar, the pollutant removal capacity may not be computed and verified simply by an adsorption amount of the biochar for the pollutants. By optimizing a preparation process of the biochar material, a series of biochar materials with various types and various kinds are obtained in sequence, advantages of various materials are used to form a comprehensive advantage, the compound materials are formed according to the various bisphenol components, for example, BPA and TBBPA with different concentrations in the water body, to minimize the total weight of the consumed materials and moderate the removal efficiency, the various bisphenol components, for example, and BPA and TBBPA are removed from the water body synchronously, so as to improve efficiency and an effect of wastewater treatment, and further to reduce treatment costs, which is conducive to large-scale use.

The unclaimed objective of the present disclosure is to further provide a compound biochar material for performing the above method. A removal agent compounded with raw biochar, ball-milled modified biochar and iron modified biochar is used, an optimal formulation is obtained by means of linear programming and solid loading amount(an adsorption amount minus a desorption amount) computation for different concentrations of the various bisphenol components, for example, BPA and TBBPA in the wastewater, and compounding of the various types of biochar materials at a plurality of preparation temperatures may obtain a treatment solution with a best removal effect and a smallest amount of consumption of the biochar materials, synchronous treatment of the various bisphenol components at a single time, and a lowest comprehensive cost.

The invention is set out in the independent method claim 1 which comprises the essential features of the invention. Further, preferred embodiments are described in dependent claims 2-7. In order to achieve the above objective, the present disclosure provides the following technical solution:

A method for efficiently removing bisphenol pollutants from a water body includes:

A, preparing three types of biochar materials, that is, biochar (BC), ball-milled modified biochar (BBC), and iron oxide modified biochar (BC@Fe$_3$O$_4$);

B, computing maximum solid loading amounts per unit weight of the three types of materials for the various bisphenol pollutants (for example, BPA and TBBPA) in wastewater separately;

C, measuring contents of the plurality of bisphenol pollutants (for example, BPA and TBBPA) in a wastewater sample separately;

D, computing an optimal mixing ratio of each of at least two types of biochar materials by means of a linear programming algorithm and by taking a minimum total weight of the material composed of at least one of BC and BBC and BC@Fe$_3$O$_4$ after mixing as an objective function and taking a maximum total solid loading amount not less than the contents of the various bisphenol pollutants (for example, BPA and TBBPA) in the wastewater sample as a constraint condition; and

E, weighing corresponding weights of the corresponding biochar materials according to the optimal mixing ratios respectively, uniformly mixing same to prepare a compound biochar material, and adding the compound biochar material to the wastewater at once to remove the various bisphenol pollutants (for example, BPA and TBBPA) from the water body synchronously. Specifically, the method further includes:

A1, preparing three types of twelve kinds of biochar materials, specifically, preparing four kinds of biochar by pyrolyzing sawdust biomass in a nitrogen atmosphere at 350°C, 500°C, 650°C and 800°C for 4 h respectively, and marking the four kinds of biochar as BC350, BC500, BC650 and BC800 correspondingly; placing BC350, BC500, BC650 as well as BC800 and agate mill balls in ball-milling tanks, milling same separately to obtain irregular particles in shape, and marking ball-milled modified biochar correspondingly obtained as BBC350, BBC500, BBC650 and BBC800 respectively; and performing iron oxide modification on BC350, BC500, BC650 and BC800, and marking obtained iron oxide modified biochar as BC350@Fe$_3$O$_4$, BC500@Fe$_3$O$_4$, BC650@Fe$_3$O$_4$ and BC800@Fe$_3$O$_4$;

B1, measuring and computing maximum BPA and TBBPA solid loading amounts per unit weight of the three types of twelve kinds of materials in the wastewater separately, and taking the maximum solid loading amounts as parameters for determining constraint conditions of the materials in linear programming;

C1, measuring contents of BPA and TBBPA in the wastewater sample separately;

D1, computing an optimal mixing ratio of each of three types of biochar materials by means of a linear programming algorithm and by taking a minimum total weight of the material composed of at least two of the three types and at least three of the twelve kinds of biochar materials after mixing as an objective function and taking a maximum total solid loading amount not less than the contents of BPA and TBBPA in the wastewater sample as a constraint condition; and

E1, weighing corresponding weights of the three types of twelve kinds of biochar materials according to the optimal mixing ratios respectively, uniformly mixing same to prepare a compound biochar material, and adding the compound biochar material to the wastewater to remove the BPA and TBBPA from the water body.

As for a compound biochar material used for the method for efficiently removing bisphenol pollutants from a water body, the compound biochar material is a uniform mixture, with at least two types of biochar materials, prepared by mixing one of BC and BBC and BC@Fe$_3$O$_4$ according to an optimal mixing ratio, and is used for removing the various bisphenol pollutants (for example, BPA and TBBPA) from the water body; and based on the content of the bisphenol pollutants (for example, BPA and TBBPA) in the wastewater sample and the maximum solid loading amount of the as least two types of biochar materials, the optimal mixing ratio takes a minimum total weight of the compound material as an objective function and takes a maximum total solid loading amount not less than the content of the bisphenol pollutants (for example, BPA and TBBPA) in the water body as a constraint condition, to obtain the compound material, composed of at least two types of materials, by means of the linear programming algorithm, an adsorption amount of the biochar obtained after compounding of the at least two types of biochar materials is not less than a minimum adsorption amount of each kind of biochar, and a desorption amount of the biochar obtained after compounding is not greater than a maximum desorption amount of each kind of biochar.

The three types of biochar materials BC, BBC and BC@Fe$_3$O$_4$ are prepared at different temperatures to obtain twelve kinds of materials: BC350, BC500, BC650, BC800, BBC350, BBC500, BBC650, BBC800, BC350@Fe$_3$O$_4$, BC500@Fe$_3$O$_4$, BC650@Fe$_3$O$_4$, and BC800@Fe$_3$O$_4$; and the compound biochar material is a uniform mixture obtained by mixing three types of biochar materials BC, BBC and BC@Fe$_3$O$_4$, that is, compounding and combining three to twelve kinds of the twelve kinds of biochar materials according to the optimal mixing ratio.

Compared with the prior art, the present disclosure has the advantages:

1. A method for efficiently removing bisphenol pollutants from a water body and a compound biochar material provided in the present disclosure mainly overcome the defects of high treatment cost, low efficiency, etc. caused by using a single material to remove one pollutant in existing wastewater treatment, and a broad-spectrum removal agent is obtained by compounding various biochar materials with different advantages and features. Specifically, three biochar materials of raw biochar, ball-milled modified biochar and iron modified biochar, with different features, prepared under different temperature conditions are compounded to serve as a removal agent, and various bisphenol (represented by BPA and TBBPA) organic pollutants with different molecular weights in wastewater may be synchronously removed by single-time application. of the various biochar materials compounded exert the performance advantages separately, such that a removal effect and efficiency are improved, various bisphenol components, for example, BPA, TBBPA, etc. are synchronously removed from the water body, treatment efficiency and effect of the wastewater are improved, an adsorption amount is largest, a desorption amount is smallest, the comprehensive treatment cost of material consumption and removal period is reduced, and the purpose of large-scale use is facilitated.

2. The method for efficiently removing bisphenol pollutants from a water body and a compound biochar material provided in the present disclosure are used for synchronously and efficiently removing the various bisphenol organic pollutants, for example, BPA, TBBPA, etc. with different concentrations from the water body, various biochar materials with different performances and features are used and compounded, such that a treatment solution with a minimum use amount and a lowest cost of the compound biochar material is obtained. Moreover, a novel method for accurately predicting and verifying pollutant removal capacity of the biochar is used, so as to verify an effect and efficiency for removing the various bisphenol organic pollutants, for example, BPA, TBBPA, etc. with different concentrations from a water environment. Adsorption and desorption coexist in a pollutant removal process of the biochar material, such that pollutant removal capacity may not be predicted and verified merely by the pollutant adsorption amount of the biochar. The present disclosure uses a solid loading amount (a desorption amount minus an adsorption amount) to improve accuracy of prediction and verification of the pollutant removal capacity of the biochar.

3. Three types of twelve kinds of biochar materials are prepared separately, adsorption amounts, desorption amounts and solid loading amounts of the biochar materials for single components of the bisphenol organic pollutants are tested separately. The solid loading amount is used for predicting and verifying the removal capacity of the biochar materials for the various bisphenol organic pollutants, for example, bisphenol A (BPA) and tetrabromobisphenol A (TBBPA). By means of prediction and verification, for BPA, the ball-milled and iron oxide modification may significantly improve a BPA adsorption amount, desorption amount and solid loading amount of the biochar, and reduce a BPA desorption rate and desorption hysteresis coefficient of the biochar, and the BPA adsorption amount, desorption amount, desorption rate, desorption hysteresis coefficient and solid loading amount of the biochar material may increase along with the increase in pollutant concentration.

4. By means of actual prediction computation and verification, it is found that at a low BPA concentration (1 mg/L), a BPA solid loading amount of the ball-milled modified biochar is 1959.5 mg/kg-3156.5 mg/kg, which is 2.5 times-40.9 times a solid loading amount of the raw biochar; and a BPA solid loading amount of the iron modified biochar is 397.4 mg/kg-1444.2 mg/kg, which is 1.9 times-10.2 times the solid loading amount of the raw biochar. At a medium BPA concentration (5.6 mg/L), the BPA solid loading amount of the ball-milled modified biochar is 6780.8 mg/kg-15555.9 mg/kg, which is 4.6 times-103.6 times the solid loading amount of the raw biochar; and the BPA solid loading amount of the iron modified biochar is 2087.8 mg/kg-7642.1 mg/kg, which is 1.2 times-28.6 times the solid loading amount of the raw biochar. At a high BPA concentration (32 mg/L), the BPA solid loading amount of the ball-milled modified biochar is 10180.1 mg/kg-32916.0 mg/kg, which is 4.8 times-87.0 times the solid loading amount of the raw biochar; and the BPA solid loading amount of the iron modified biochar is 4129.1 mg/kg-24181.8 mg/kg, which is 2.2 times-37.4 times the solid loading amount of the raw biochar. For TBBPA, no desorption process exists, such that the adsorption amount is the solid loading amount.

5. The ball-milled and iron oxide modified materials provided in the present disclosure further improve the TBBPA solid loading amount of the biochar remarkably: when an initial concentration of TBBPA is 0.1 mg/L, a TBBPA solid loading amount of the ball-milled modified biochar is 3689.2 mg-3896.8 mg/kg, which is 17.5 times-56.8 times a solid loading amount of the raw biochar; and a TBBPA solid loading amount of the iron modified biochar is 441.5 mg/kg-2660.7 mg/kg, which is 2.1 times-16.6 times the solid loading amount of the raw biochar. When the initial concentration of TBBPA is 0.3 mg/L, the TBBPA solid loading amount of the ball-milled modified biochar is 8119.9 mg/kg-11870.9 mg/kg, which is 14.7 times-65.9 times the solid loading amount of the raw biochar; and the TBBPA solid loading amount of the iron modified biochar is 1586.2 mg/kg-9467.7 mg/kg, which is 2.9 times-27.1 times the solid loading amount of the raw biochar. When the initial concentration of TBBPA is 1 mg/L, the TBBPA solid loading amount of the ball-milled modified biochar is 13380.2 mg/kg-29539.5 mg/kg, which is 7.0 times-47.9 times of the solid loading amount of the raw biochar; and the TBBPA solid loading amount of the iron modified biochar is 3314.1 mg/kg-28625.7 mg/kg, which is 1.7 times-46.4 times the solid loading amount of the raw biochar.

6. According to the wastewater treatment method and the unclaimed compound biochar material provided in the present disclosure, various raw biochar, ball-milled modified biochar and iron oxide modified biochar with different advantages and features are compounded to serve as a broad-spectrum removal agent. A use amount of the compound material may be accurately computed and verified according to components and concentrations of the various pollutants in the wastewater. The various bisphenol (represented by BPA and TBBPA) organic pollutants with different molecular weights may be removed from the wastewater synchronously by single-time application. The plurality of biochar materials for compounding exert the performance advantages separately and improve the removal effect and efficiency, the treatment process is simplified, the treatment cost is reduced, and large-scale popularization is facilitated.

BRIEF DESCRIPTION OF THE SEVERAL VIEWS OF THE DRAWINGS

Fig. 1 is a scanning electron micrograph of a compound biochar material according to an invention of the present disclosure;
Fig. 2 is an energy spectrum (SEM-EDX) analysis diagram of a compound biochar material according to an invention of the present disclosure;
Fig. 3 is an XPS element distribution map of a biochar material;
Fig. 4 is a Fourier transform infrared spectroscopy (FTIR) spectrum of a biochar material of the present disclosure;
Fig. 5 is a Raman spectrum of a biochar material of the present disclosure;
Fig. 6 is an $N_2$ adsorption-desorption curve of the biochar material of the present disclosure;
Fig. 7 shows actual BPA adsorption amounts of biochar with different mixing ratios according to an invention of the present disclosure;
Fig. 8 shows actual TBBPA adsorption amounts of biochar with different mixing ratios according to an invention of the present disclosure;
Fig. 9 shows theoretical maximum BPA and TBBPA adsorption amounts of biochar with different mixing ratios according to an invention of the present disclosure;
Fig. 10 shows desorption rates of BPA on biochar with different mixing ratios according to an invention of the present disclosure;
Fig. 11 shows desorption hysteresis coefficients HI of BPA on biochar with different mixing ratios according to an invention of the present disclosure;
Fig. 12 is a graph showing a BPA solid loading amount of biochar with different mixing ratios according to an invention of the present disclosure; and
Fig. 13 shows a TBBPA solid loading amount of biochar with different mixing ratios according to an invention of the present disclosure.

DETAILED DESCRIPTION OF THE INVENTION

The present disclosure will be elaborated hereafter in conjunction with the accompanying drawings and inventions.

Embodiment 1:

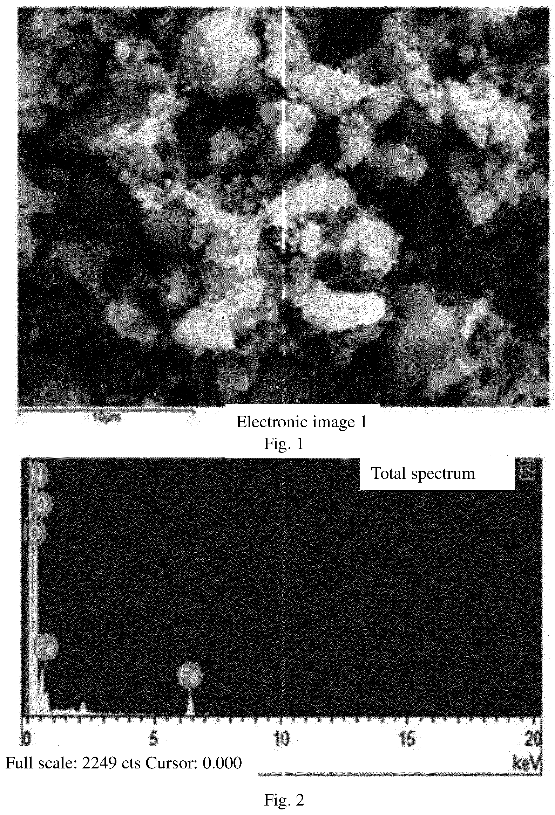

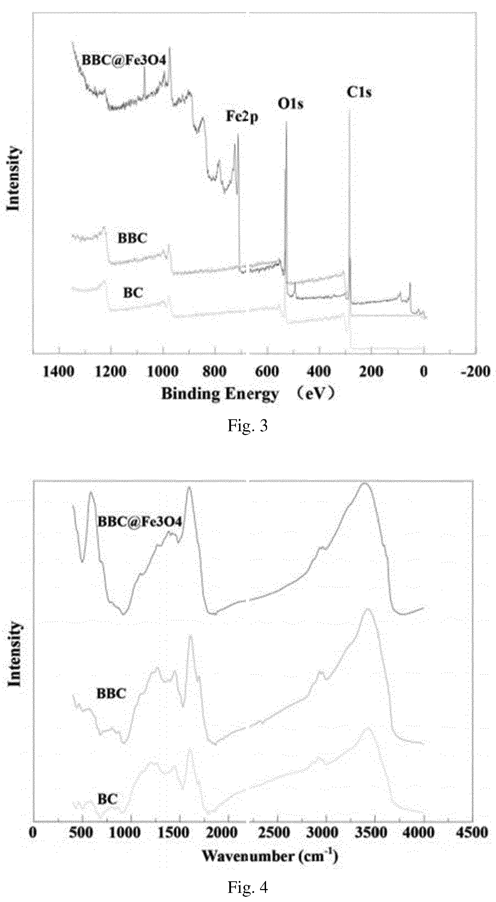

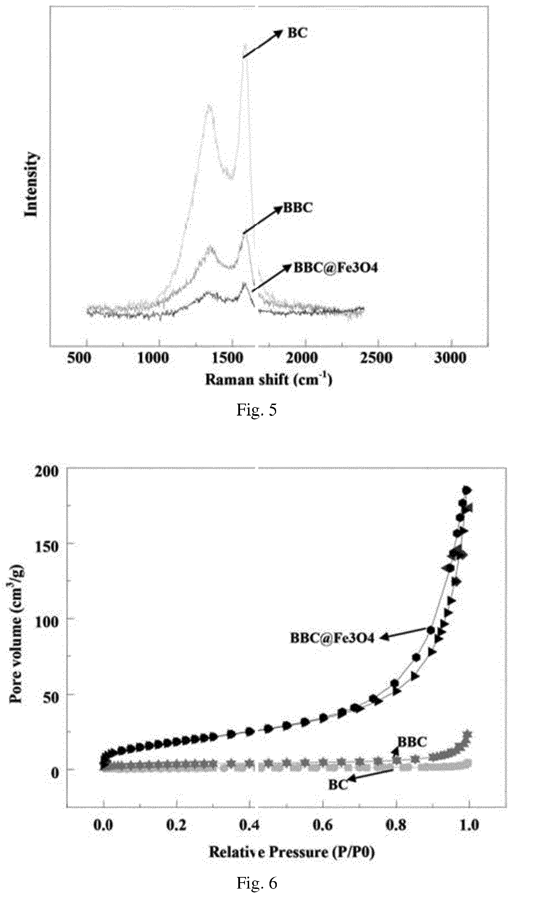

With reference to Figs. 1-6, the invention provides a method for efficiently removing bisphenol pollutants from a water body. As an example of removing BPA and TBBPA of the bisphenol pollutants, the method includes:

A, three types of biochar materials, that is, biochar (BC), ball-milled modified biochar (BBC), and iron oxide modified biochar (BC@$Fe_3O_4$) are prepared;
B, maximum solid loading amounts per unit weights of the three types of materials for the plurality of bisphenol pollutants (BPA and TBBPA) in wastewater are computed separately;
C, contents of the plurality of bisphenol pollutants (BPA and TBBPA) in a wastewater sample are measured separately;
D, an optimal mixing ratio of each of at least two types of biochar materials is computed by means of a linear programming algorithm and by taking a minimum total weight of the material composed of at least one of BC and BBC and BC@$Fe_3O_4$ after mixing as an objective function and taking a maximum total solid loading amount not less than the contents of the plurality of bisphenol pollutants (BPA and TBBPA) in the wastewater sample as a constraint condition; and
E, corresponding weights of the corresponding biochar materials are taken according to the optimal mixing ratios respectively to be uniformly mixed to prepare a compound biochar material, and the compound biochar material is added to the wastewater at once to remove the plurality of bisphenol pollutants (BPA and TBBPA) from the water body synchronously. A preparation process of the biochar with different mixing ratios includes: BC, BBC and BC@Fe$_3$O$_4$ biochar with set mass (and prepared at different temperatures) are accurately weighed by using a balance according to the optimal mixing ratio computed in step D, BC and/or BBC and BC@Fe$_3$O$_4$ are adding into a brown sample storage bottle separately, are oscillated for 10 min on a vortex instrument at a speed of 2000 r/min to make same fully and uniformly mixed, and are stored for later use; when in use, the biochar is uniformly applied to a water body containing various bisphenol pollutants, and the various bisphenol pollutants are removed from the water body by means of adsorption or decomposition of the biochar.

As for the foregoing compound biochar material used for the method for efficiently removing bisphenol pollutants from a water body, the compound biochar material is a uniform mixture, with two or three types of biochar materials, prepared by mixing one of BC and BBC and BC@Fe$_3$O$_4$ according to an optimal mixing ratio, and is used for removing the plurality of bisphenol pollutants (represented by BPA and TBBPA) from the water body; and based on the content of the bisphenol pollutants (for example, BPA and TBBPA) in the wastewater sample and the maximum solid loading amount of the as least two types of biochar materials, the optimal mixing ratio takes a minimum total weight of the compound material as an objective function and takes a maximum total solid loading amount not less than the content of the bisphenol pollutants (for example, BPA and TBBPA) in the water body as a constraint condition, to obtain the compound material, composed of at least two types of biochar materials, by means of the linear programming algorithm, an adsorption amount of the biochar obtained after compounding of the at least two types of materials is not less than a minimum adsorption amount of each biochar, and moreover, a desorption amount of the biochar obtained after compounding of three types of materials is not greater than a maximum desorption amount of each biochar.

Embodiment 2:

The method for efficiently removing bisphenol pollutants from a water body and a compound biochar material provided in the invention are basically identical to those in embodiment 1. The method for removing bisphenol pollutants further includes the following steps on the basis of embodiment 1:

A1, three types of twelve kinds of biochar materials are prepared, specifically, four kinds of biochar are prepared by pyrolyzing sawdust biomass in a nitrogen atmosphere at 350°C, 500°C, 650°C and 800°C for 4 h respectively, and are marked as BC350, BC500, BC650 and BC800 correspondingly;

BC350, BC500, BC650 as well as BC800 and agate mill balls are placed in ball-milling tanks and milled separately to obtain irregular particles in shape, and ball-milled modified biochar correspondingly obtained is marked as BBC350, BBC500, BBC650 and BBC800 respectively; and
iron oxide modification is performed on BC350, BC500, BC650 and BC800, and obtained iron oxide modified biochar is marked as BC350@Fe$_3$O$_4$, BC500@Fe$_3$O$_4$, BC650@Fe$_3$O$_4$ and BC800@Fe$_3$O$_4$ respectively.

B1, maximum BPA and TBBPA solid loading amounts per unit weight of the three types of twelve kinds of materials in the wastewater are measured and computed separately, and the maximum solid loading amounts are taken as parameters for determining constraint conditions of the materials in linear programming;
a method for measuring and computing the bisphenol pollutants solid-loaded on the biochar material includes:

1) theoretical maximum solid-phase adsorption amount:

$$Q_e = K_L \cdot Q_{max} \cdot C_e / (1 + K_L \cdot C_e) \quad (1)$$

where $Q_e$ is a solid phase concentration (mg/kg) at adsorption equilibrium, $C_e$ is a liquid phase concentration (mg/L) at adsorption equilibrium, $K_L$ (mg/L) is an adsorption coefficient of a Langmuir model, and $Q_{max}$ (mg/kg) is adsorption capacity of the Langmuir model;
2) desorption hysteresis coefficient:

$$HI = (Q_{desorb} - Q_{sorb}) / Q_{sorb} \quad (2)$$

where $Q_{sorb}$ and $Q_{desorb}$ are solid phase concentrations on an adsorption curve and a desorption curve respectively in mg/kg; HI≤0 indicates that desorption hysteresis is not obvious, HI>0 indicates that a desorption process exhibits hysteresis, and the larger HI is, the more obvious the desorption hysteresis is, and the more difficult a desorption process of an adsorbate is; and

3) solid loading amount:

$$Q_I = Q_e - Q_d \qquad (3)$$

where $Q_I$ is a solid loading amount (mg/kg) of pollutants on a solid phase after an adsorption-desorption cycle, $Q_e$ is the solid phase concentration (mg/kg) at adsorption equilibrium, and $Q_d$ is a desorption amount (mg/kg).

C1, contents of BPA and TBBPA in the wastewater sample are measured separately.

D1, an optimal mixing ratio of each of three types of biochar materials is computed by means of a linear programming algorithm and by taking a minimum total weight of the material composed of at least two types of four kinds in the three types of twelve kinds of biochar materials after compounding as an objective function and taking a maximum total solid loading amount not less than the contents of BPA and TBBPA in the wastewater sample as a constraint condition.

Step D1 that an optimal mixing ratio of each of three types of biochar materials is computed by means of a linear programming algorithm further includes step D1-1:

total mass z of the biochar after compounding the three types of materials is computed according to a functional relation between a total volume V of the wastewater to be treated and the concentrations of BPA and TBBPA as well as a total solid loading amount $Q_l$:

mass M of pollutants BPA and TBBPA = pollutant concentration * volume of wastewater $\qquad (4)$

total mass z of biochar needed for treating wastewater = total mass M of pollutant /solid loading amount $Q_l$ per unit of material $\qquad (5)$

mass percentages of BC, BBC and BC@$Fe_3O_4$ dosages are set to be $X_1$, $X_2$, and $X_3$ respectively, where coefficients of $X_1$, $X_2$, and $X_3$ are the adsorption amounts or desorption amounts of BPA and TBBPA obtained when each of the three types of biochar materials is tested independently, and constraint conditions are: the adsorption amount of the biochar with a mixing ratio of the three types of materials is not less than a minimum adsorption amount of each kind of biochar, and the desorption amount of the biochar with the mixing ratio of the three types of materials is not greater than a maximum desorption amount of each kind of biochar, which is specifically expressed as:

$$\text{Min } z = X_1*BC+X_2*BBC+X_3*BC@Fe_3O_4 \qquad (6)$$

$$\text{s.t. } 193.64X_1+3142.17X_2+315.1X_3 \geq 193.64$$

$$441.09X_1+15681.87X_2+874.1X_3 \geq 441.09$$

$$964.28X_1+41053.17X_2+1461.6X_3 \geq 964.28$$

$$210.61X_1+3689.24X_2+701.53X_3 \geq 210.61$$

$$552.94X_1+8119.98X_2+2712.05X_3 \geq 552.94$$

$$1941.31X_1+13650.96X_2+7743.68X_3 \geq 1941.31$$

$$35.4X_1+63.37X_2+28.15X_3 \leq 63.37$$

$$113.1X_1+1070.56X_2+218.21X_3 \leq 1070.56$$

$$318.5X_1+8137.16X_2+608.06X_3 \leq 8137.16$$

where, $0 \leq X_1, X_2, X_3 \leq 1$.

Step D1 further includes step D1-2:

the percentage coefficients of BC, BBC and BC@Fe$_3$O$_4$ dosages are computed to obtain $X_1$, $X_2$ and $X_3$ respectively by means of linear programming, and ratios of BC350, BC500, BC650 and BC800 constituting mass $X_1$*BC are computed according to the following equations (7), (8) and (9);

where the step that ratios of BC350, BC500, BC650 and BC800 constituting mass $X_1$*BC are computed includes:

mass percentages of the biochar, constituting the mass $X_1$*BC, at different temperatures are set to be $\alpha_1$, $\alpha_2$, $\alpha_3$, $\alpha_4$ respectively, where coefficients of $\alpha_1$, $\alpha_2$, $\alpha_3$ and $\alpha_4$ are adsorption amounts or desorption amounts of BPA and TBBPA obtained when the biochar at each temperature is tested independently, and constraint conditions are: the adsorption amount of the biochar with a mixing ratio of different temperatures is not less than a minimum adsorption amount of the biochar at each temperature, and the desorption amount of the biochar with a mixing ratio of four temperatures is not greater than a maximum desorption amount of the biochar at each temperature, which is specifically expressed as:

$$X_1 = \alpha_1 * BC350 + \alpha_2 * BC500 + \alpha_3 * BC650 + \alpha_4 * BC800 \quad (7)$$

$$s.t. \ 193.64\alpha_1 + 122.2\alpha_2 + 241.23\alpha_3 + 786.7\alpha_4 \geq 122.2$$

$$441.09\alpha_1 + 265.34\alpha_2 + 507.92\alpha_3 + 1933.4\alpha_4 \geq 265.34$$

$$964.28\alpha_1 + 549.02\alpha_2 + 838.85\alpha_3 + 2573.69\alpha_4 \geq 549.02$$

$$210.61\alpha_1 + 160.02\alpha_2 + 65.94\alpha_3 + 198.90\alpha_4 \geq 65.94$$

$$552.95\alpha_1 + 349.74\alpha_2 + 136.71\alpha_3 + 564.92\alpha_4 \geq 136.71$$

$$1941.31\alpha_1 + 616.68\alpha_2 + 294.00\alpha_3 + 1102.68\alpha_4 \geq 294$$

$$35.4\alpha_1 + 60.2\alpha_2 + 26.9\alpha_3 + 9.2\alpha_4 \leq 60.2$$

$$113.1\alpha_1 + 115.1\alpha_2 + 97.3\alpha_3 + 150.5\alpha_4 \leq 150.5$$

$$318.5\alpha_1 + 226.5\alpha_2 + 218.4\alpha_3 + 177.8\alpha_4 \leq 318.5$$

where $0 \leq \alpha_1, \alpha_2, \alpha_3, \alpha_4 \leq 1$;
the step that ratios of BBC350, BBC500, BBC650 and BBC800 constituting mass $X_2$*BBC are computed includes:

mass percentages of different ball-milled modified biochar constituting mass $X_2$*BBC are set to be $\beta_1$, $\beta_2$, $\beta_3$, and $\beta_4$ respectively, where coefficients of $\beta_1$, $\beta_2$, $\beta_3$, and $\beta_4$ are the adsorption amounts or desorption amounts of BPA and TBBPA obtained when each ball-milled modified biochar is tested independently, and constraint conditions are: the adsorption amount of the biochar with a compound ratio of different ball-milled modified biochar is not less than a minimum adsorption amount of each kind of ball-milled modified biochar, and the desorption amount of the biochar with a compound ratio of four kinds of ball-milled modified biochar is not greater than a maximum desorption amount of each kind of ball-milled modified biochar, which is specifically expressed as:

$$X_2 = \beta_1*BBC350+\beta_2*BBC500+\beta_3*BBC650+\beta_4*BBC800 \quad (8)$$

$$\text{s.t. } 3142.17\beta_1+3173.73\beta_2+1997.72\beta_3+1972.79\beta_4 \geq 1972.79$$

$$15681.87\beta_1+16347.07\beta_2+7584.39\beta_3+8726.9\beta_4 \geq 7584.39$$

$$41053.17\beta_1+34341.04\beta_2+12774.12\beta_3+13838.92\beta_4 \geq 12774.12$$

$$3689.24\beta_1+3896.88\beta_2+3742.634\beta_3+3781.39\beta_4 \geq 3689.24$$

$$8119.98\beta_1+11870.88\beta_2+9006.54\beta_3+11352.99\beta_4 \geq 8119.98$$

$$13650.96\beta_1+29539.55\beta_2+13380.15\beta_3+20384.79\beta_4 \geq 13380.15$$

$$63.37\beta_1+17.22\beta_2+34.87\beta_3+13.34\beta_4 \leq 63.37$$

$$1070.56\beta_1+791.15\beta_2+803.56\beta_3+574.62\beta_4 \leq 1070.56$$

$$8137.16\beta_1+6277.06\beta_2+2594.01\beta_3+2392.41\beta_4 \leq 8137.16$$

where $0 \leq \beta_1, \beta_2, \beta_3, \beta_4 \leq 1$;
the step that ratios of BC350@$Fe_3O_4$, BC500@$Fe_3O_4$, BC650@$Fe_3O_4$ and BC800@$Fe_3O_4$ constituting mass $X_3*BCgFe_3O_4$ are computed includes:

mass percentages of different iron oxide modified biochar constituting mass $X_3*BC@Fe_3O_4$ are set to be $\gamma_1, \gamma_2, \gamma_3,$ and $\gamma_4$ respectively, where coefficients of $\gamma_1, \gamma_2, \gamma_3,$ and $\gamma_4$ are the adsorption amounts or desorption amounts of BPA and TBBPA obtained when each iron oxide modified biochar is tested independently, and constraint conditions are: the adsorption amount of the biochar with a compound ratio of different iron oxide modified biochar is not less than a minimum adsorption amount of each kind of iron oxide modified biochar, and the desorption amount of the biochar with a compound ratio of four kinds of iron oxide modified biochar is not greater than a maximum desorption amount of each kind of iron oxide modified biochar, which is specifically expressed as:

$$X_3 = \gamma_1 * BC350@Fe_3O_4 + \gamma_2 * BC500@Fe_3O_4 + \gamma_3 * BC650@Fe_3O_4 + \gamma_4 * BC800@$$

$$Fe_3O_4 \quad (9)$$

$$\text{s.t. } 315.1\gamma_1 + 57.8\gamma_2 + 94.48\gamma_3 + 346.43\gamma_4 \geq 57.8$$

$$874.1\gamma_1 + 126.5\gamma_2 + 191.59\gamma_3 + 705.65\gamma_4 \geq 126.5$$

$$1461.6\gamma_1 + 301.41\gamma_2 + 285.78\gamma_3 + 1002.66\gamma_4 \geq 285.78$$

$$701.53\gamma_1 + 857.5\gamma_2 + 53.00\gamma_3 + 216.69\gamma_4 \geq 53$$

$$2712.05\gamma_1 + 2469.51\gamma_2 + 1761.72\gamma_3 + 1786.25\gamma_4 \geq 1761.72$$

$$7743.68\gamma_1 + 4722.09\gamma_2 + 4454.56\gamma_3 + 3631.57\gamma_4 \geq 3631.57$$

$$28.15\gamma_1 + 23.17\gamma_2 + 43.75\gamma_3 + 40.43\gamma_4 \leq 43.75$$

$$218.21\gamma_1 + 61.23\gamma_2 + 129.33\gamma_3 + 203.86\gamma_4 \leq 218.21$$

$$608.06\gamma_1 + 224.69\gamma_2 + 214.16\gamma_3 + 437.16\gamma_4 \leq 608.06$$

where $0 \leq \gamma_1, \gamma_2, \gamma_3, \gamma_4 \leq 1$;
E1, corresponding weights of the three types of twelve kinds of biochar materials are taken according to the optimal mixing ratios respectively to be uniformly mixed to prepare a mixed biochar material, and the material is uniformly added to the wastewater to remove the BPA and TBBPA from the water body.

The three types of biochar materials BC, BBC and $BC@Fe_3O_4$ are prepared at different temperatures to obtain twelve kinds of materials: BC350, BC500, BC650, BC800, BBC350, BBC500, BBC650, BBC800, $BC350@Fe_3O_4$, $BC500@Fe_3O_4$, $BC650@Fe_3O_4$, and $BC800@Fe_3O_4$; and the compound biochar material is a uniform mixture obtained by mixing three types of biochar materials BC, BBC and $BC@Fe_3O_4$, that is, mixing and combining three to twelve kinds of the twelve kinds of biochar materials according to the optimal mixing ratio.

The compound biochar material is provided with a granular structure with a rough surface and an irregular shape, and Fe, C, O and N are uniformly distributed on a surface of the biochar. The compound biochar material includes, in percentage by mass, 3.81%-8.77% of iron at the surface, 64.3%-76.34% of carbon at the surface, and 16.98%-24.84% of oxygen at the surface, and contains more oxygen-containing functional groups than a single material. The compound biochar material is provided with hydroxyl (-OH), carboxyl (-COOH), carbonyl (-C=O), aliphatic -CH, aromatic C=C and aromatic -CH groups, contains more -COOH oxygen-containing functional groups than the single material and has Fe-O functional groups formed. A large number of functional groups and the moderate content are used for interaction between the compound biochar material and the pollutants with different molecular weights, so as to enhance synchronous adsorption capacity of the compound biochar material for the various pollutants.

Embodiment 3:

The method for efficiently removing bisphenol pollutants from a water body and a compound biochar material provided in the invention are basically identical to those in Embodiments 1 and 2. In the method for removing bisphenol pollutants, according to a mass ratio, step A1 further includes the following steps on the basis of Inventions 1 and 2:

A1-1, biomass pretreatment is performed:
the sawdust biomass is washed with clean water to remove pollutants attached to the biomass; and the washed biomass is placed in an oven for drying at 30°C-40°C, and the dried biomass is sieved with an 80-mesh sieve for use.

A1-2, biochar (BC) is prepared:

a set amount of biomass is wrapped in tin paper, and then put into muffle furnaces, and nitrogen is introduced into the muffle furnaces for 30 min to exhaust air; every 150°C is set as a temperature interval, the muffle furnace is cooled to a room temperature when pyrolysis is carried out at 350°C, 500°C, 650°C and 800°C separately for 4 h in the nitrogen atmosphere, the biochar prepared at each temperature is taken out, uniformly milled, and sieved with 100-mesh sieves for use, so as to obtain biochar with four different preparation temperatures; and corresponding to the preparation temperatures, the biochar is marked as BC350, BC500, BC650 and BC800, respectively; in step A1-2, when a temperature of the biochar prepared increases from 350°C to 800°C, a carbon content of the biochar formed increases continuously, an oxygen content is reduced continuously, atomic ratios of H/C and O/C are reduced, aromaticity of the biochar prepared at a high temperature of 650°C-800°C increases, pores of a mesoporous structure are developed, polarity of the mesoporous structure is reduced, and hydrophobicity of the mesoporous structure increases; as the preparation temperature of the biochar increases, an average pore size of the mesoporous structure is reduced continuously, and a specific surface area increases significantly; and when BC350, BC500, BC650, BC800 are compounded, diameters of the pore sizes are increasingly large, the average pore size ranges from 1.66 nm to 23.7 nm, and different pore sizes are conducive to entry of pollutants with different molecular weights into biochar channels, so as to increase an adsorption amount and reduce a desorption amount.

A1-3, ball-milled modified biochar (BBC) is prepared:

1g of biochar and 100g of agate mill balls are weighed into a ball-milling tank to be mixed uniformly; the biochar is milled at 300 r/min for 12 h, and specifically, rotating is performed clockwise for 6 h and counterclockwise for 6 h with an interval therebetween being 1h in an entire process; and marking obtained ball-milled modified biochar as BBC350, BBC500, BBC650, BBC800 separately; and in step A1-3, as for the ball-milled BBC350, BBC500, BBC650 and BBC800 materials, a carbon content of the biochar is reduced, an oxygen content and a content of an oxygen-containing functional group of the biochar increase, a pore size and a specific surface area of the biochar are expanded, the specific surface area ranges from 3.54 $m^2$/g to 333 $m^2$/g, and the large specific surface area increases surface defect sites of the biochar, and provides abundant adsorption sites for the pollutants with different molecular weights, so as to further increase the adsorption amount and reduce the desorption amount; and

A1-4, iron oxide modified biochar (BC@$Fe_3O_4$) is prepared:

300 mL of deionized water is weighed into a 500 mL three-neck flask, and nitrogen is introduced for 30 min at a room temperature to exhaust air in the three-neck flask; 4.4903 g of $FeCl_3 \cdot 6H_2O$ and 2.3074 g of $FeSO_4 \cdot 7H_2O$ are weighed into the three-neck flask with air exhausted and stirred at a room temperature until the same is dissolved to obtain a mixed solution; 1.925 g of biochar is weighed into the mixed solution and stirred at a room temperature for 30 min, and then 10 M NaOH dropwise is continuously added into the mixed solution until a pH of the mixed solution is 10-11 and a black precipitate is generated; stirring is performed at a room temperature at 50 r/min for 1 h until precipitation is complete, then standing is performed at a room temperature for 3 h-4 h, and the black precipitate BC@$Fe_3O_4$ is separated by means of a magnet or suction filtration; the separated BC@$Fe_3O_4$ is washed with ultrapure water five times and absolute ethanol three times, and BC@$Fe_3O_4$ is vacuum dried for use; and obtained iron oxide modified biochar is marked as BC350@$Fe_3O_4$, BC500@$Fe_3O_4$, BC650@$Fe_3O_4$, BC800@$Fe_3O_4$ separately; in step A1-4, as for BC350@$Fe_3O_4$, BC500@$Fe_3O_4$, BC650@$Fe_3O_4$ and BC800@$Fe_3O_4$ modified by iron oxide $Fe_3O_4$, a carbon content of the biochar is reduced, an oxygen content, an oxygen-containing functional group, a surface defect site and a pore size of the biochar increase; a specific surface area of BC350 modified by iron oxide increases obviously; specific surface areas of BC500, BC650 and BC800 modified by iron oxide are reduced significantly; and when the BC@$Fe_3O_4$ is compounded with BC and BBC, a change range of a mesopore size and the specific surface area is expanded, so as to further increase the adsorption amount for the pollutants with different molecular weights and reduce the desorption amount.

The compound biochar material is provided with an amorphous carbon structure and a graphitic carbon structure, the graphitic carbon structure with a higher degree of crystallization has a large mesoporous content, developed pores and strong hydrophobicity; an average pore size of a mesoporous structure ranges from 1.66 nm to 23.7 nm, a specific surface area ranges from 3.54 $m^2$/g to 333 $m^2$/g, a large difference in pore sizes of the mesoporous structure is conducive to adsorption of the pollutants with different molecular weights into biochar channels, and the large and small specific surface areas of the plurality of materials combine with one another to provide abundant adsorption sites for the pollutants with different molecular weights, so as to increase the adsorption amount and reduce the desorption amount.

According to the present disclosure, adsorption and desorption coexist in the pollutant removal process of the biochar material, such that the pollutant removal capacity may not be represented merely by the pollutant adsorption amount of the biochar, and the solid loading amount (an adsorption amount minus a desorption amount) may accurately evaluate and verify parameters of the pollutant removal capacity of the biochar.

According to the present disclosure, a removal agent compounded with raw biochar, ball-milled modified biochar and iron modified biochar is used for removing bisphenol (BPA and TBBPA) organic pollutants from a water body, and an optimal mixing ratio of the compounding agent is obtained by computing a solid loading amount of the compounding agent for the pollutants, so as to obtain a solution with a lowest treatment cost, and further to evaluate and verify the pollutant removal capacity of the compound material.

Three types of biochar materials are prepared in the invention of the present disclosure, and the capacity to remove bisphenol A (BPA) and tetrabromobisphenol A (TBBPA) is evaluated by using the solid loading amount. For BPA, the ball-milled and iron oxide modification may significantly improve a BPA adsorption amount, desorption amount and solid loading amount of the biochar, and reduce a BPA desorption rate and desorption hysteresis coefficient of the biochar, and the BPA adsorption amount, desorption amount, desorption rate, desorption hysteresis coefficient and solid loading amount of the biochar material may increase along with the increase in pollutant concentration.

Embodiment 4:

The method for efficiently removing bisphenol pollutants from a water body and a compound biochar material provided in the invention are basically identical to those in Embodiments 2 and 3. On the basis of Embodiments 1, 2 and 3, step B1 of a method for measuring and computing an adsorption-desorption-solid loading amount of the biochar materials with different mixing ratios for the bisphenol pollutants further includes step B1 that actual adsorption amounts of the various biochar materials are measured and computed as follows:

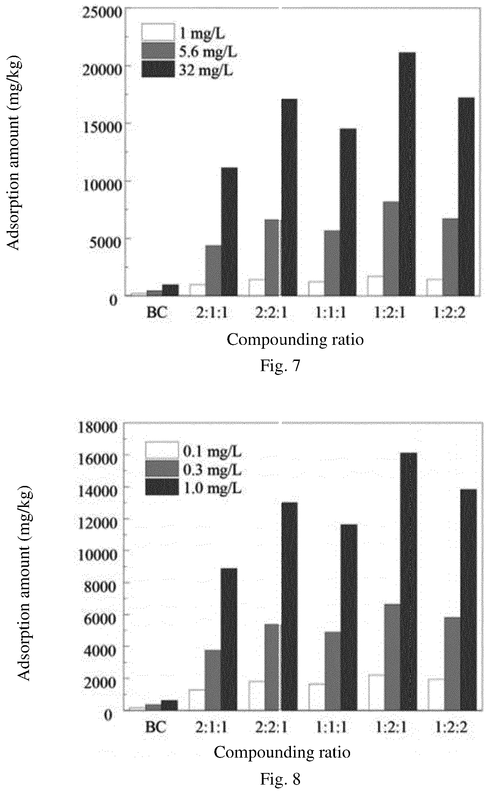

(1) Low-concentration, medium-concentration and high-concentration pollutant mixed solutions are prepared by using a mixed solution of 0.01 mol/L $CaCl_2$ and 200 mg/L $NaN_3$, where the pollutant concentrations are 1 mg/L of BPA and 0.1 mg/L of TBBPA, 5.6 mg/L of BPA and 0.3 mg/L of TBBPA, and 32 mg/L of BPA and 1 mg/L of TBBPA. Set amounts of biochar materials with mixing ratios of BC to BBC to BC/$Fe_3O_4$ being 2:1:1, 2:2:1, 1:1:1, 1:2:1 and 1:2:2 are added into the pollutant solutions separately according to solid-to-liquid ratios of 1:3000, 1:4200, 1:3600, 1:5000 and 1:4200. Sample bottles are placed in a rotary oscillator, oscillated in a dark place, and sampled at 1 min, 5 min, 15 min, 30 min, 1 h, 2 h, 3 h, 5 h, 8 h, 12 h, 24 h, 36 h, 72 h, 120 h and 168 h separately, and samples pass through a 0.22 um filter membrane and then are measured by HPLC. As shown in Figs. 7 and 8, the biochar materials with different mixing ratios significantly increase the BPA and TBBPA adsorption amount of the biochar.

(2) When the mixing ratio of BC to BBC to BC@$Fe_3O_4$ is 2:1:1 and initial pollutant concentrations are 1 mg/L of BPA and 0.1 mg/L of TBBPA, a BPA adsorption amount of the compound biochar is 643.66 mg/kg-973.16 mg/kg, which is 1.24 times-7.11 times an adsorption amount of raw biochar, and a TBBPA adsorption amount of the compound biochar is 981.88 mg/kg-1268.61 mg/kg, which is 5.53 times-14.89 times an adsorption amount of the raw biochar. When the initial pollutant concentrations are 5.6 mg/L of BPA and 0.3 mg/L of TBBPA, a BPA adsorption amount of the compound biochar is 2197.96 mg/kg-4359.54 mg/kg, which is 1.72 times-16.02 times the adsorption amount of the raw biochar, and a TBBPA adsorption amount of the compound biochar is 2760.42 mg/kg-3759.97 mg/kg, which is 5.39 times-20.19 times the adsorption amount of the raw biochar. When the initial pollutant concentrations are 32 mg/L of BPA and 1 mg/L of TBBPA, a BPA adsorption amount of the compound biochar is 3684.4 mg/kg-11110.83 mg/kg, which is 1.94 times-16.27 times the adsorption amount of the raw biochar, and a TBBPA adsorption amount of the compound biochar is 4605.68 mg/kg-8873.75 mg/kg, which is 3.26 times-15.67 times the adsorption amount of the raw biochar.

(3) When the mixing ratio of BC to BBC to BC@$Fe_3O_4$ is 2:2:1 and initial pollutant concentrations are 1 mg/L of BPA and 0.1 mg/L of TBBPA, a BPA adsorption amount of the compound biochar is 914.48 mg/kg-1397.34 mg/kg, which is 1.49 times-10.88 times an adsorption amount of raw biochar, and a TBBPA adsorption amount of the compound biochar is 1534.03 mg/kg-1794.26 mg/kg, which is 8.07 times-23.26 times an adsorption amount of the raw biochar. When the initial pollutant concentrations are 5.6 mg/L of BPA and 0.3 mg/L of TBBPA, a BPA adsorption amount of the compound biochar is 3275.24 mg/kg-6670.24 mg/kg, which is 2.28 times-25.14 times the adsorption amount of the raw biochar, and a TBBPA adsorption amount of the compound biochar is 4009.64 mg/kg-5382.15 mg/kg, which is 7.25 times-29.33 times the adsorption amount of the raw biochar. When the initial pollutant concentrations are 32 mg/L of BPA and 1 mg/L of TBBPA, a BPA adsorption amount of the compound biochar is 5502.34 mg/kg-17099.3 mg/kg, which is 2.63 times-25.53 times the adsorption amount of the raw biochar, and a TBBPA adsorption amount of the compound biochar is 7785.64 mg/kg-13006.91 mg/kg, which is 4.01 times-21.63 times the adsorption amount of the raw biochar.

(4) When the mixing ratio of BC to BBC to BC@Fe$_3$O$_4$ is 1:1:1 and initial pollutant concentrations are 1 mg/L of BPA and 0.1 mg/L of TBBPA, a BPA adsorption amount of the compound biochar is 777.81 mg/kg-1216.97 mg/kg, which is 1.32 times-9.15 times an adsorption amount of raw biochar, and a TBBPA adsorption amount of the compound biochar is 1287.19 mg/kg-1638.14 mg/kg, which is 7.03 times-19.52 times an adsorption amount of the raw biochar. When the initial pollutant concentrations are 5.6 mg/L of BPA and 0.3 mg/L of TBBPA, a BPA adsorption amount of the compound biochar is 2761.3 mg/kg-5665.69 mg/kg, which is 1.96 times-21.02 times the adsorption amount of the raw biochar, and a TBBPA adsorption amount of the compound biochar is 3634.99 mg/kg-4896.71 mg/kg, which is 6.86 times-26.59 times the adsorption amount of the raw biochar. When the initial pollutant concentrations are 32 mg/L of BPA and 1 mg/L of TBBPA, a BPA adsorption amount of the compound biochar is 4632.92 mg/kg-14493.02 mg/kg, which is 2.26 times-21.37 times the adsorption amount of the raw biochar, and a TBBPA adsorption amount of the compound biochar is 6042.90 mg/kg-11626.11 mg/kg, which is 4.01 times-20.55 times the adsorption amount of the raw biochar.

(5) When the mixing ratio of BC to BBC to BC@Fe$_3$O$_4$ is 1:2:1 and initial pollutant concentrations are 1 mg/L of BPA and 0.1 mg/L of TBBPA, a BPA adsorption amount of the compound biochar is 1082.79 mg/kg-1698.27 mg/kg, which is 1.61 times-13.35 times an adsorption amount of raw biochar, and a TBBPA adsorption amount of the compound biochar is 1901.05 mg/kg-2202.82 mg/kg, which is 9.84 times-28.83 times an adsorption amount of the raw biochar. When the initial pollutant concentrations are 5.6 mg/L of BPA and 0.3 mg/L of TBBPA, a BPA adsorption amount of the compound biochar is 3967.07 mg/kg-8271.50 mg/kg, which is 2.60 times-31.17 times the adsorption amount of the raw biochar, and a TBBPA adsorption amount of the compound biochar is 4876.23 mg/kg-6640.25 mg/kg, which is 8.82 times-36.41 times the adsorption amount of the raw biochar. When the initial pollutant concentrations are 32 mg/L of BPA and 1 mg/L of TBBPA, a BPA adsorption amount of the compound biochar is 6668.22 mg/kg-21133.06 mg/kg, which is 3.04 times-31.66 times the adsorption amount of the raw biochar, and a TBBPA adsorption amount of the compound biochar is 7877.22 mg/kg-16104.47 mg/kg, which is 4.76 times-26.79 times the adsorption amount of the raw biochar.

(6) When the mixing ratio of BC to BBC to BC@Fe$_3$O$_4$ is 1:2:2 and initial pollutant concentrations are 1 mg/L of BPA and 0.1 mg/L of TBBPA, a BPA adsorption amount of the compound biochar is 885.13 mg/kg-1421.64 mg/kg, which is 1.38 times-10.78 times an adsorption amount of raw biochar, and a TBBPA adsorption amount of the compound biochar is 1531.43 mg/kg-1933.76 mg/kg, which is 8.24 times-23.23 times an adsorption amount of the raw biochar. When the initial pollutant concentrations are 5.6 mg/L of BPA and 0.3 mg/L of TBBPA, a BPA adsorption amount of the compound biochar is 3211.98 mg/kg-6710.61 mg/kg, which is 2.15 times-25.03 times the adsorption amount of the raw biochar, and a TBBPA adsorption amount of the compound biochar is 4334.6 mg/kg-5806.1 mg/kg, which is 8.03 times-31.71 times the adsorption amount of the raw biochar. When the initial pollutant concentrations are 32 mg/L of BPA and 1 mg/L of TBBPA, a BPA adsorption amount of the compound biochar is 5391.73 mg/kg-17198.76 mg/kg, which is 2.51 times-25.44 times the adsorption amount of the raw biochar, and a TBBPA adsorption amount of the compound biochar is 7192.68 mg/kg-13827.99 mg/kg, which is 4.60 times-24.46 times the adsorption amount of the raw biochar.

By means of comparison, it is found that the biochar materials with different mixing ratios obviously increase the BPA and TBBPA adsorption amounts of the biochar, the adsorption amounts are increased along with the increase in the pollutant concentrations. When the mixing ratio of BC to BBC to BC@Fe$_3$O$_4$ is 1:2:1, the adsorption amounts of the biochar material for the two pollutants are largest, and the compound biochar prepared at 350°C has a best BPA adsorption effect; and the compound biochar prepared at 500°C has a best TBBPA adsorption effect.

Step B1 of the method for measuring and computing the bisphenol pollutants solid-loaded on the compound biochar material, that is, a method for verifying a theoretical maximum adsorption amount of the compound material, further includes step B1-2:

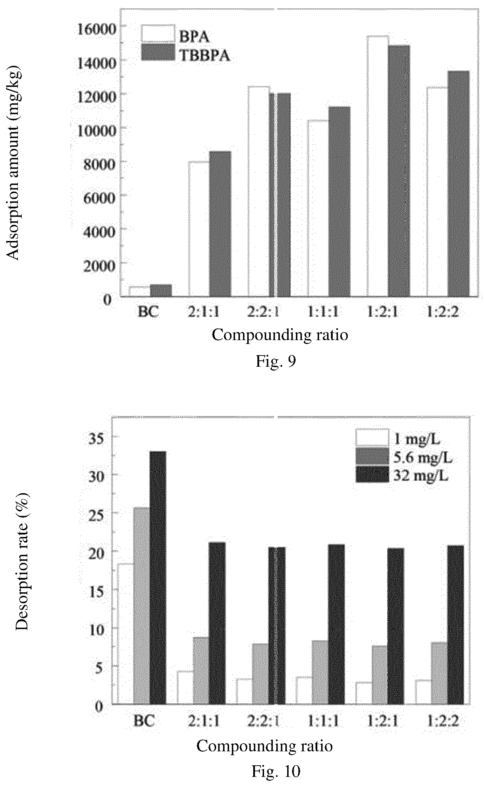

A mixed solution with concentrations of BPA being 1 mg/L-32 mg/L and TBBPA being 0.1 mg/L-1.0 mg/L is prepared by using a solution of 0.01 mol/L CaCl$_2$ and 200 mg/L NaN$_3$, and each adsorption curve includes 9 concentration gradients. Set amounts of biochar materials with mixing ratios of BC to BBC to BC/Fe$_3$O$_4$ being 2:1:1, 2:2:1, 1:1:1, 1:2:1 and 1:2:2 are added into the pollutant solutions separately according to solid-to-liquid ratios of 1:3000, 1:4200, 1:3600, 1:5000 and 1:4200, and are oscillated in a rotary oscillator in a dark place for 7 days. A liquid phase concentration is measured after equilibration, and a theoretical maximum solid-phase adsorption amount is computed by equation (1). Results show (in Fig. 10) that when the mixing ratio of BC to BBC to BC@Fe$_3$O$_4$ is 2:1:1, a theoretical maximum adsorption amount $Q_{max}$ for BPA is 3240.00 mg/kg-10647.57 mg/kg, and a theoretical maximum adsorption amount $Q_{max}$ for TBBPA is 8587.71 mg/kg-13209.45 mg/kg, which are 1.98 times-14.29 times and 3.30 times-28.99 times maximum adsorption amounts of the raw biochar respectively. When the mixing ratio of BC to BBC to BC@Fe$_3$O$_4$ is 2:2:1, a theoretical maximum adsorption amount $Q_{max}$ for BPA is 4811.17 mg/kg-16355.53 mg/kg, and a theoretical maximum adsorption amount $Q_{max}$ for TBBPA is 10537.91 mg/kg-13179.37 mg/kg, which are 2.69 times-22.36 times and 3.29 times-30.60 times the maximum adsorption amounts of the raw biochar respectively. When the mixing ratio of BC to BBC to BC@$Fe_3O_4$ is 1:1:1, a theoretical maximum adsorption amount $Q_{max}$ for BPA is 4057.15 mg/kg-13863.12 mg/kg, and a theoretical maximum adsorption amount $Q_{max}$ for TBBPA is 10017.39 mg/kg-16279.27 mg/kg, which are 2.31 times-18.72 times and 4.07 times-38.30 times the maximum adsorption amounts of the raw biochar respectively. When the mixing ratio of BC to BBC to BC@$Fe_3O_4$ is 1:2:1, a theoretical maximum adsorption amount $Q_{max}$ for BPA is 5816.82 mg/kg-20194.19 mg/kg, and a theoretical maximum adsorption amount $Q_{max}$ for TBBPA is 12879.35 mg/kg-15474.22 mg/kg, which are 3.11 times-27.71 times and 3.87 times-37.99 times the maximum adsorption amounts of the raw biochar respectively. When the mixing ratio of BC to BBC to BC@$Fe_3O_4$ is 1:2:2, a theoretical maximum adsorption amount $Q_{max}$ for BPA is 4710.87 mg/kg-16435.56 mg/kg, and a theoretical maximum adsorption amount $Q_{max}$ for TBBPA is 11786.44 mg/kg-18735.12 mg/kg, which are 2.57 times-22.27 times and 4.68 times-45.76 times the maximum adsorption amounts of the raw biochar respectively. By means of comparison, it can be seen that when the mixing ratio of BC to BBC to BC@$Fe_3O_4$ is 1:2:1, the BPA and TBBPA adsorption amounts of the compound biochar are largest.

Step B1 of the method for measuring and computing the bisphenol pollutants solid-loaded on the compound biochar material, that is, a method for verifying an adsorption-desorption rate of the compound material, further includes step B1-4:

(1) Based on the foregoing adsorption experiment, supernate is taken out after adsorption equilibrium, a $CaCl_2$ and $NaN_3$ mixed solution with the amount approximately equal to that of the taken-out solution is added, a volume of the added mixed solution is accurately recorded, after 7 days of equilibrium under the identical condition, supernate is taken out, liquid phase concentrations of BPA and TBBPA are measured, and a desorption rate is computed. Results show (in Fig. 9) that a BPA desorption rate of the compound biochar material is significantly lower than that of the raw biochar, while no TBBPA desorption behavior occurs on all biochar materials, indicating that the compound biochar material has stronger BPA and TBBPA holding capacity.

(2) When the mixing ratio of BC to BBC to BC@$Fe_3O_4$ is 2:1:1 and initial pollutant concentrations are 1 mg/L of BPA and 0.1 mg/L of TBBPA, a desorption rate of BPA on the compound biochar is 1.85%-4.22%, which is 0.09 time-0.46 time a desorption rate of the raw biochar. A desorption rate of TBBPA on the compound biochar is 0. When the initial pollutant concentrations are 5.6 mg/L of BPA and 0.3 mg/L of TBBPA, a desorption rate of BPA on the compound biochar is 6.47%-12.82%, which is 0.15 time-0.67 time the desorption rate of the raw biochar. A desorption rate of TBBPA on the compound biochar is 0. When the initial pollutant concentrations are 32 mg/L of BPA and 1 mg/L of TBBPA, a desorption rate of BPA on the compound biochar is 15.93%-22.02%, which is 0.47 time-0.85 time the desorption rate of the raw biochar. A desorption rate of TBBPA on the compound biochar is 0.

(3) When the mixing ratio of BC to BBC to BC@$Fe_3O_4$ is 2:2:1 and initial pollutant concentrations are 1 mg/L of BPA and 0.1 mg/L of TBBPA, a desorption rate of BPA on the compound biochar is 1.46%-3.67%, which is 0.05 time-0.33 time a desorption rate of the raw biochar. A desorption rate of TBBPA on the compound biochar is 0. When the initial pollutant concentrations are 5.6 mg/L of BPA and 0.3 mg/L of TBBPA, a desorption rate of BPA on the compound biochar is 5.62%-11.79%, which is 0.12 time-0.96 time the desorption rate of the raw biochar. A desorption rate of TBBPA on the compound biochar is 0. When the initial pollutant concentrations are 32 mg/L of BPA and 1 mg/L of TBBPA, a desorption rate of BPA on the compound biochar is 16.49%-21.22%, which is 0.46 time-0.81 time the desorption rate of the raw biochar. A desorption rate of TBBPA on the compound biochar is 0.

(4) When the compounding ratio of BC to BBC to BC@$Fe_3O_4$ is 1:1:1 and initial pollutant concentrations are 1 mg/L of BPA and 0.1 mg/L of TBBPA, a desorption rate of BPA on the compound biochar is 2.03%-4.52%, which is 0.06 time-0.41 time a desorption rate of the raw biochar. A desorption rate of TBBPA on the compound biochar is 0. When the initial pollutant concentrations are 5.6 mg/L of BPA and 0.3 mg/L of TBBPA, a desorption rate of BPA on the compound biochar is 5.78%-12.44%, which is 0.13 time-0.65 time the desorption rate of the raw biochar. A desorption rate of TBBPA on the compound biochar is 0. When the initial pollutant concentrations are 32 mg/L of BPA and 1 mg/L of TBBPA, a desorption rate of BPA on the compound biochar is 17.23%-21.77%, which is 0.46 time-0.84 time the desorption rate of the raw biochar. A desorption rate of TBBPA on the compound biochar is 0.

(5) When the mixing ratio of BC to BBC to BC@$Fe_3O_4$ is 1:2:1 and initial pollutant concentrations are 1 mg/L of BPA and 0.1 mg/L of TBBPA, a desorption rate of BPA on the compound biochar is 1.50%-3.24%, which is 0.04 time-0.29 time a desorption rate of the raw biochar. A desorption rate of TBBPA on the compound biochar is 0. When the initial pollutant concentrations are 5.6 mg/L of BPA and 0.3 mg/L of TBBPA, a desorption rate of BPA on the compound biochar is 5.32%-11.55%, which is 0.12 time-0.96 time the desorption rate of the raw biochar. A desorption rate of TBBPA on the compound biochar is 0. When the initial pollutant concentrations are 32 mg/L of BPA and 1 mg/L of TBBPA, a desorption rate of BPA on the compound biochar is 17.28%-21.07%, which is 0.45 time-0.81 time the desorption rate of the raw biochar. A desorption rate of TBBPA on the compound biochar is 0.

(6) When the mixing ratio of BC to BBC to BC@$Fe_3O_4$ is 1:2:2 and initial pollutant concentrations are 1 mg/L of BPA and 0.1 mg/L of TBBPA, a desorption rate of BPA on the compound biochar is 2.14%-4.16%, which is 0.04 time-0.17 time a desorption rate of the raw biochar. A desorption rate of TBBPA on the compound biochar is 0. When the initial pollutant concentrations are 5.6 mg/L of BPA and 0.3 mg/L of TBBPA, a desorption rate of BPA on the compound biochar is 5.48%-12.22%, which is 0.13 time-0.64 time the desorption rate of the raw biochar. A desorption rate of TBBPA on the compound biochar is 0. When the initial pollutant concentrations are 32 mg/L of BPA and 1 mg/L of TBBPA, a desorption rate of BPA on the compound biochar is 18.10%-21.64%, which is 0.46 time-0.83 time the desorption rate of the raw biochar. A desorption rate of TBBPA on the compound biochar is 0.

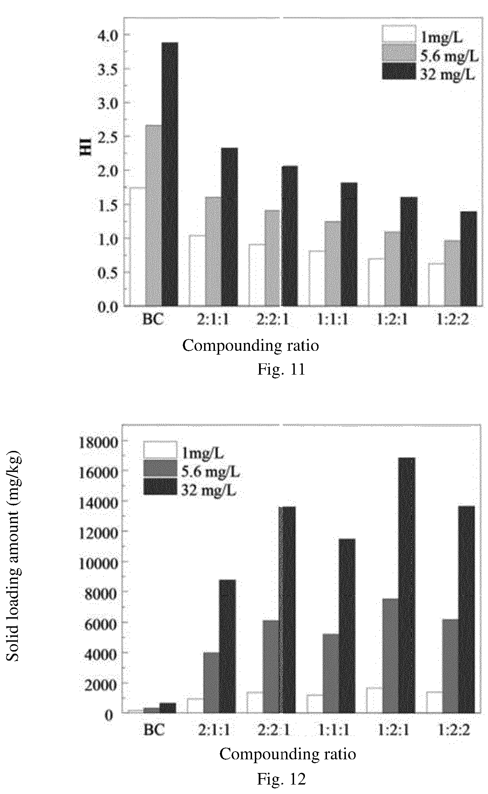

Step B1 of the method for measuring and computing the bisphenol pollutants solid-loaded on the compound biochar material, that is, a method for verifying a desorption hysteresis coefficient HI of the compound material, further includes step B1-5:
A desorption hysteresis coefficient HI of BPA on the biochar material is computed according to equation (2). Results show that a desorption hysteresis coefficient HI of BPA on the compound biochar material is reduced, and TBBPA generates no desorption behavior (in Fig. 11).

(1) When the mixing ratio of BC to BBC to $BC@Fe_3O_4$ is 2:1:1 and the pollutant initial concentrations are 1 mg/L of BPA and 0.1 mg/L of TBBPA, a desorption hysteresis coefficient HI of BPA on the compound biochar is 0.61-1.04. When the pollutant initial concentrations are 5.6 mg/L of BPA and 0.3 mg/L of TBBPA, a desorption hysteresis coefficient HI of BPA on the compound biochar is 0.98-1.85. When the initial pollutant concentrations are 32 mg/L of BPA and 1 mg/L of TBBPA, HI of BPA on the compound biochar is 1.43-2.65.
(2) When the mixing ratio of BC to BBC to $BC@Fe_3O_4$ is 2:2:1 and the pollutant initial concentrations are 1 mg/L of BPA and 0.1 mg/L of TBBPA, a desorption hysteresis coefficient HI of BPA on the compound biochar is 0.58-1.10. When the pollutant initial concentrations are 5.6 mg/L of BPA and 0.3 mg/L of TBBPA, HI of BPA on the compound biochar is 0.91-1.59. When the initial pollutant concentrations are 32 mg/L of BPA and 1 mg/L of TBBPA, HI of BPA on the compound biochar is 1.32-2.27.
(3) When the mixing ratio of BC to BBC to $BC@Fe_3O_4$ is 1:1:1 and the pollutant initial concentrations are 1 mg/L of BPA and 0.1 mg/L of TBBPA, a desorption hysteresis coefficient HI of BPA on the compound biochar is 0.49-1.01. When the pollutant initial concentrations are 5.6 mg/L of BPA and 0.3 mg/L of TBBPA, HI of BPA on the compound biochar is 0.81-1.35. When the initial pollutant concentrations are 32 mg/L of BPA and 1 mg/L of TBBPA, HI of BPA on the compound biochar is 1.18-1.88.
(4) When the mixing ratio of BC to BBC to $BC@Fe_3O_4$ is 1:2:1 and the pollutant initial concentrations are 1 mg/L of BPA and 0.1 mg/L of TBBPA, a desorption hysteresis coefficient HI of BPA on the compound biochar is 0.47-0.83. When the pollutant initial concentrations are 5.6 mg/L of BPA and 0.3 mg/L of TBBPA, HI of BPA on the compound biochar is 0.78-1.14. When the initial pollutant concentrations are 32 mg/L of BPA and 1 mg/L of TBBPA, HI of BPA on the compound biochar is 1.10-1.60.
(5) When the mixing ratio of BC to BBC to $BC@Fe_3O_4$ is 1:2:2 and the pollutant initial concentrations are 1 mg/L of BPA and 0.1 mg/L of TBBPA, a desorption hysteresis coefficient HI of BPA on the compound biochar is 0.30-0.77. When the pollutant initial concentrations are 5.6 mg/L of BPA and 0.3 mg/L of TBBPA, HI of BPA on the compound biochar is 0.60-0.96. When the initial pollutant concentrations are 32 mg/L of BPA and 1 mg/L of TBBPA, HI of BPA on the compound biochar is 0.98-1.40.

Embodiment 5:

The method for efficiently removing bisphenol pollutants from a water body and a compound biochar material provided in the invention are basically identical to those in Embodiments 1 - 4. On the basis of Embodiments 1-4, the method for removing bisphenol pollutants uses the biochar material prepared at 350°C for compounding, and further, a method for verifying a solid loading amount of the compound material includes:
The solid loading amounts QI of the biochar material for BPA and TBBPA are computed according to equation (3). Since TBBPA does not generate desorption, the TBBPA adsorption amount of the biochar material is the TBBPA solid loading amount.

When initial concentrations of the bisphenol pollutants in the water body are 1mg/L of BPA and 0.1 mg/L of TBBPA, a mixing ratio of BC350 to BBC350 to $BC350@Fe_3O_4$ obtained after computation by means of equations (4)-(9) in step B is 2:1:1 after being rounded, it is detected that a BPA solid loading amount of the compound biochar is 610.56 mg/kg-955.11 mg/kg, which is 1.23 times-13.37 times a solid loading amount of raw biochar; and a TBBPA solid loading amount of the compound biochar is 981.88 mg/kg-1268.61 mg/kg, which is 5.53 times-14.89 times a solid loading amount of the raw biochar. When the initial concentrations of the bisphenol pollutants in the water body increase to 5.6 mg/L of BPA and 0.3 mg/L of TBBPA, a BPA solid loading amount of the compound biochar in the ratio is 1916.08 mg/kg-3980.80 mg/kg, which is 1.71 times-26.49 times the solid loading amount of the raw biochar; and a TBBPA solid loading amount of the compound biochar is 2760.42 mg/kg-3759.97 mg/kg, which is 5.39 times-20.19 times the solid loading amount of the raw biochar. When the initial concentrations of the bisphenol pollutants in the water body are 32 mg/L of BPA and 1 mg/L of TBBPA, a BPA solid loading amount of the compound biochar in the ratio is 2873.16 mg/kg-8765.28 mg/kg, which is 1.75 times-22.31 times the solid loading amount of the raw biochar; and a TBBPA solid loading amount of the compound biochar is 4605.68 mg/kg-8873. 75 mg/kg, which is 3.26 times-15.67 times the solid loading amount of the raw biochar.

Embodiment 6:

The method for efficiently removing bisphenol pollutants from a water body and a compound biochar material provided in the invention are basically identical to those in Embodiment 5. On the basis of Invention 5, the method for removing bisphenol pollutants uses the biochar material prepared at 500°C for compounding, and further, a method for verifying a solid loading amount of the compound material includes:
When initial concentrations of the bisphenol pollutants in the water body are 1 mg/L of BPA and 0.1 mg/L of TBBPA, a mixing ratio of BC500 to BBC500 to BC500@$Fe_3O_4$ obtained after computation by means of equations (4)-(9) in step B is 2:2:1 after being rounded, it is detected that a BPA solid loading amount of the compound biochar is 881.02 mg/kg-1352.21 mg/kg, which is 1.49 times-20.88 times a solid loading amount of raw biochar; and a TBBPA solid loading amount of the compound biochar is 1534.03 mg/kg-1794.26 mg/kg, which is 8.07 times-23.26 times a solid loading amount of the raw biochar. When the initial concentrations of the bisphenol pollutants in the water body are 5.6 mg/L of BPA and 0.3 mg/L of TBBPA, a BPA solid loading amount of the compound biochar is 2889.03 mg/kg-6295.52 mg/kg, which is 2.29 times-41.90 times the solid loading amount of the raw biochar; and a TBBPA solid loading amount of the compound biochar is 4009.64 mg/kg-5382.15 mg/kg, which is 7.25 times-29.33 times the solid loading amount of the raw biochar. When the initial concentrations of the bisphenol pollutants in the water body are 32 mg/L of BPA and 1 mg/L of TBBPA, a BPA solid loading amount of the compound biochar is 4334.55 mg/kg-13595.42 mg/kg, which is 2.36 times-35.25 times the solid loading amount of the raw biochar; and a TBBPA solid loading amount of the compound biochar is 7785.64 mg/kg-13006.91 mg/kg, which is 4.01 times-21.63 times the solid loading amount of the raw biochar.

Embodiment 7:

The method for efficiently removing bisphenol pollutants from a water body and a compound biochar material provided in the invention are basically identical to those in Embodiments 5 and 6. On the basis of Embodiments 5 and 6, the method for removing bisphenol pollutants uses the biochar material prepared at 650°C for compounding, and further, a method for verifying a solid loading amount of the compound material includes:
When initial concentrations of the bisphenol pollutants in the water body are 1 mg/L of BPA and 0.1 mg/L of TBBPA, a mixing ratio of BC650 to BBC650 to BC650@$Fe_3O_4$ obtained after computation by means of equations (4)-(9) in step B is 1:1:1 after being rounded, a BPA solid loading amount of the compound biochar is 742.64 mg/kg-1174.66 mg/kg, which is 1.30 times-17.49 times a solid loading amount of raw biochar; and a TBBPA solid loading amount of the compound biochar is 1287.19 mg/kg-1638.14 mg/kg, which is 7.03 times-19.52 times a solid loading amount of the raw biochar.
When the initial concentrations of the bisphenol pollutants in the water body are 5.6 mg/L of BPA and 0.3 mg/L of TBBPA, a BPA solid loading amount of the compound biochar is 2417.9 mg/kg-5257.14 mg/kg, which is 1.95 times-34.99 times the solid loading amount of the raw biochar; and a TBBPA solid loading amount of the compound biochar is 3634.99 mg/kg-4896.71 mg/kg, which is 6.86 times-26.59 times the solid loading amount of the raw biochar.
When the initial concentrations of the bisphenol pollutants in the water body are 32 mg/L of BPA and 1 mg/L of TBBPA, a BPA solid loading amount of the compound biochar is 3624.06 mg/kg-11471.78 mg/kg, which is 2.00 times-29.42 times the solid loading amount of the raw biochar; and a TBBPA solid loading amount of the compound biochar is 6042.90 mg/kg-11626.11 mg/kg, which is 4.01 times-20.55 times the solid loading amount of the raw biochar.

Embodiment 8:

The method for efficiently removing bisphenol pollutants from a water body and a compound biochar material provided in the invention are basically identical to those in Embodiments 5 - 7. On the basis of Embodiments 5-7, the method for removing bisphenol pollutants uses the biochar material prepared at 800°C for compounding, and further, a method for verifying a solid loading amount of the compound material includes:
When initial concentrations of the bisphenol pollutants in the water body are 1 mg/L of BPA and 0.1 mg/L of TBBPA, a mixing ratio of BC800 to BBC800 to BC800@$Fe_3O_4$ obtained after computation by means of equations (4)-(9) in step B is 1:2:1 after being rounded, a BPA solid loading amount of the compound biochar is 1047.69 mg/kg-1650.70 mg/kg, which is 1.61 times-25.85 times a solid loading amount of raw biochar; and a TBBPA solid loading amount of the compound biochar is 1901.05 mg/kg-2202.82 mg/kg, which is 9.84 times-28.83 times a solid loading amount of the raw biochar.
When the initial concentrations of the bisphenol pollutants in the water body are 5.6 mg/L of BPA and 0.3 mg/L of TBBPA, a BPA solid loading amount of the compound biochar is 3508.64 mg/kg-7831.84 mg/kg, which is 2.61 times-52.13 times the solid loading amount of the raw biochar; and a TBBPA solid loading amount of the compound biochar is 4876.23 mg/kg-6640.25 mg/kg, which is 8.82 times-36.41 times the solid loading amount of the raw biochar.

When the initial concentrations of the bisphenol pollutants in the water body are 32 mg/L of BPA and 1 mg/L of TBBPA, a BPA solid loading amount of the compound biochar is 5263.07 mg/kg-16832.84 mg/kg, which is 2.70 times-43.82 times the solid loading amount of the raw biochar; and a TBBPA solid loading amount of the compound biochar is 7877.22 mg/kg-16104.47 mg/kg, which is 4.76 times-26.79 times the solid loading amount of the raw biochar.

Embodiment 9:

The method for efficiently removing bisphenol pollutants from a water body and a compound biochar material provided in the invention are basically identical to those in Embodiments 5 - 8. On the basis of Embodiments 5-8, the method for removing bisphenol pollutants uses the biochar materials prepared at a plurality of temperatures for compounding, and further, a method for verifying a solid loading amount of the compound material includes:

When initial concentrations of the bisphenol pollutants in the water body are 1 mg/L of BPA and 0.1 mg/L of TBBPA, a mixing ratio of BC to BBC to BC@$Fe_3O_4$ obtained after computation by means of equations (4)-(9) in step B is 1:2:2, a BPA solid loading amount of the compound biochar is 848.3 mg/kg-1377.95 mg/kg, which is 1.37 times-20.79 times a solid loading amount of raw biochar; and a TBBPA solid loading amount of the compound biochar is 1531.43 mg/kg-1933.76 mg/kg, which is 8.24 times-23.23 times a solid loading amount of the raw biochar.

When the initial concentrations of the bisphenol pollutants in the water body are 5.6 mg/L of BPA and 0.3 mg/L of TBBPA, a BPA solid loading amount of the compound biochar is 2819.36 mg/kg-6278.52 mg/kg, which is 2.14 times-41.79 times the solid loading amount of the raw biochar; and a TBBPA solid loading amount of the compound biochar is 4334.6 mg/kg-5806.1 mg/kg, which is 8.03 times-31.71 times the solid loading amount of the raw biochar.

When the initial concentrations of the bisphenol pollutants in the water body are 32 mg/L of BPA and 1 mg/L of TBBPA, a BPA solid loading amount of the compound biochar is 4224.78 mg/kg-13636.98 mg/kg, which is 2.21 times-35.10 times the solid loading amount of the raw biochar; and a TBBPA solid loading amount of the compound biochar is 7192.68 mg/kg-13827.99 mg/kg, which is 4.60 times-24.46 times the solid loading amount of the raw biochar.

By means of comparison, it is found that the biochar materials compounded with materials at different temperatures obviously increase the BPA and TBBPA solid loading amounts of the biochar, the solid loading amounts are increased along with the increase in the pollutant concentrations. When the mixing ratio of BC to BBC to BC@$Fe_3O_4$ is 1:2:1, the solid loading amounts of the biochar material for the two pollutants are largest, and the compound biochar prepared at 350°C has a best BPA solid loading effect; and the compound biochar prepared at 500°C has a best TBBPA solid loading effect. A specific surface area of BC350@$Fe_3O_4$ is largest.

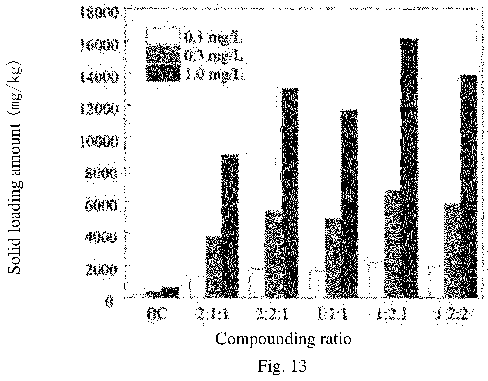

According to the present disclosure, the computation results of the solid loading amount show that the biochar materials prepared at different temperatures and in different mixing ratios remarkably increase the BPA and TBBPA solid loading amounts of the biochar (in Figs. 12 and 13), so as to improve a removal effect, reduce a total use amount, and reduce application frequency.

According to the present disclosure, three types of various kinds of biochar materials are compounded, and the pollutant removal capacity of the biochar materials with different mixing ratios is verified, such that a new method capable of effectively improving use efficiency of the biochar and reducing the consumption and the application frequency is provided. According to the present disclosure, a removal agent compounded with raw biochar, ball-milled modified biochar and iron modified biochar is used for removing various bisphenol (for example, BPA and TBBPA) organic pollutants from a water body. An optimal mixing ratio of the compounding agent is obtained by computing a pollutant solid loading amount of the compounding agent. The pollutant removal capacity of the compound biochar material is accurately predicted and experimentally verified by means of theoretical computation, so as to guarantee the pollutant removal accuracy and reduce the total cost, which is a scientific and rigorous technical solution.

Although only BPA and TBBPA are used as examples in the inventions of the present disclosure, the present disclosure is applicable to other bisphenol pollutant components in the water body, for example, BADGE-HCL-$H_2O$, BADGE, BADGE-HCL, BADGE-$H_2O$, BADGE-2HCL, BADGE-2$H_2O$, BFDGE, BFDGE-2$H_2O$, BFDGE-2HCL, BPA, BPF, Bis-S and other organic pollutants and derivatives thereof.

While the effect of removing the various bisphenol pollutants from the water body is improved, the total use amount and the application frequency of the biochar are reduced, so as to greatly reduce the wastewater treatment cost, and facilitate large-scale popularization. By means of actual tests, the various bisphenol pollutants may be removed from the water body by one-time application and removal, and a set standard is reached. Compared with a traditional technology, the total treatment solution of the present disclosure may save the total cost by 50% or more, and improve the removal efficiency by 30% or more.

**Claims**

1. A method for efficiently removing bisphenol pollutants from a water body, comprising:

A, preparing three types of biochar materials, that is, biochar (BC), ball-milled modified biochar (BBC), and iron oxide modified biochar (BC@Fe$_3$O$_4$);

B, computing maximum solid loading amounts per unit weight of the three types of materials for the various bisphenol pollutants in wastewater separately;

C, measuring contents of the various bisphenol pollutants in a wastewater sample separately;

D, computing an optimal mixing ratio of each of the three types of biochar materials by means of a linear programming algorithm, using a minimum total weight of the material composed of BC, BBC and BC@Fe$_3$O$_4$ after mixing as the objective function and a maximum total solid loading amount not less than the contents of the bisphenol pollutants in the wastewater sample as the constraint condition; and

E, weighing corresponding weights of the corresponding biochar materials according to the optimal mixing ratios respectively, uniformly mixing them to prepare a mixed biochar material, and adding the material to the wastewater to remove the bisphenol pollutants synchronously.

2. The method for efficiently removing bisphenol pollutants from a water body according to claim 1, wherein step A further comprises:

A1, preparing three types of twelve kinds of biochar materials, specifically, preparing four kinds of biochar by pyrolyzing sawdust biomass in a nitrogen atmosphere at 350°C, 500°C, 650°C and 800°C for 4 h respectively, and marking the four kinds of biochar as BC350, BC500, BC650 and BC800 correspondingly;

placing BC350, BC500, BC650 as well as BC800 and agate mill balls in ball-milling tanks, milling same separately to obtain irregular particles in shape, and marking ball-milled modified biochar correspondingly obtained as BBC350, BBC500, BBC650 and BBC800 respectively; and

performing iron oxide modification on BC350, BC500, BC650 and BC800, and marking obtained iron oxide modified biochar as BC350@Fe$_3$O$_4$, BC500@Fe$_3$O$_4$, BC650@Fe$_3$O$_4$ and BC800@Fe$_3$O$_4$.

3. The method for efficiently removing bisphenol pollutants from a water body according to claim 2, wherein according to a mass ratio, step A1 further comprises:

A1-1, performing biomass pretreatment:

washing the sawdust biomass with clean water to remove pollutants attached to the biomass; and placing the washed biomass in an oven for drying at 30°C-40°C, and sieving the dried biomass with an 80-mesh sieve for use;

A1-2, preparing biochar (BC):

wrapping a set amount of biomass in tin paper, putting same into muffle furnaces, and introducing nitrogen into the muffle furnaces for 30 min to exhaust air; setting every 150°C as a temperature interval, cooling the muffle furnaces to a room temperature when pyrolysis is carried out at 350°C, 500°C, 650°C and 800°C separately for 4 h in the nitrogen atmosphere, taking out the biochar prepared at each temperature, milling the biochar, and uniformly sieving the biochar with 100-mesh sieves for use, so as to obtain biochar with four different preparation temperatures; and corresponding to the preparation temperatures, marking the biochar as BC350, BC500, BC650 and BC800, respectively;

A1-3, preparing ball-milled modified biochar (BBC):

weighing 1g of biochar and 100g of agate mill balls into a ball-milling tank, and uniformly mixing same; milling the biochar at 300 r/min for 12 h, and specifically, rotating clockwise for 6 h and counterclockwise for 6 h with an interval therebetween being 1 h in an entire process; and marking obtained ball-milled modified biochar as BBC350, BBC500, BBC650, BBC800 separately; and

A1-4, preparing iron oxide modified biochar (BC@Fe$_3$O$_4$):

weighing 300 mL of deionized water into a 500 mL three-neck flask, and introducing nitrogen for 30 min at a room temperature to exhaust air in the three-neck flask; weighing 4.4903 g of FeCl$_3$•6H$_2$O and 2.3074 g of FeSO$_4$•7H$_2$O into the three-neck flask with air exhausted, and stirring same at a room temperature until the same is dissolved to obtain a mixed solution; weighing 1.925 g of biochar into the mixed solution, stirring same at a room temperature for 30 min, and then continuously adding 10 M NaOH dropwise into the mixed solution until a pH of the mixed solution is 10-11 and a black precipitate is generated; performing stirring at a room temperature at 50 r/min for 1 h until precipitation is complete, then standing at a room temperature for 3 h-4 h, and separating the black precipitate BC@Fe$_3$O$_4$ by means of a magnet or suction filtration; washing the separated BC@Fe$_3$O$_4$ with ultrapure water five times and absolute ethanol three times, and vacuum drying BC@Fe$_3$O$_4$ for use; and marking obtained iron oxide modified biochar as BC350@Fe$_3$O$_4$, BC500@Fe$_3$O$_4$, BC650@Fe$_3$O$_4$, BC800@Fe$_3$O$_4$ separately.

4. The method for efficiently removing bisphenol pollutants from a water body according to claim 2, further comprising:

B1, measuring and computing maximum Bisphenol A (BPA) and Tetrabromobisphenol A (TBBPA) solid loading amounts per unit weight of the three types of twelve kinds of materials in the wastewater separately, and taking the maximum solid loading amounts as parameters for determining constraint conditions of the materials in linear programming;

C1, measuring contents of BPA and TBBPA in the wastewater sample separately;

D1, computing an optimal compounding ratio of each of three types of biochar materials by means of a linear programming algorithm and by taking a minimum total weight of the material composed of at least three of the three types of twelve kinds of biochar materials after compounding as an objective function and taking a maximum total solid loading amount not less than the contents of BPA and TBBPA in the wastewater sample as a constraint condition; and

E1, weighing corresponding weights of the three types of twelve kinds of biochar materials according to the optimal compounding ratios respectively, uniformly mixing same to prepare a compound biochar material, and adding the compound biochar material to the wastewater to remove the BPA and TBBPA from the water body.

5. The method for efficiently removing bisphenol pollutants from a water body according to claim 4, wherein in step B1, a method for measuring and computing the bisphenol pollutants solid-loaded on the biochar material comprises:

1) theoretical maximum solid-phase adsorption amount:

$$Q_e = K_L \cdot Q_{max} \cdot C_e / (1 + K_L \cdot C_e) \quad (1)$$

wherein $Q_e$ is a solid phase concentration in mg/kg at adsorption equilibrium, $C_e$ is a liquid phase concentration in mg/L at adsorption equilibrium, $K_L$ is an adsorption coefficient of a Langmuir model in mg/L, and $Q_{max}$ is adsorption capacity of the Langmuir model in mg/kg;

2) desorption hysteresis coefficient:

$$HI = (Q_{desorb} - Q_{sorb}) / Q_{sorb} \quad (2)$$

wherein $Q_{sorb}$ and $Q_{desorb}$ are solid phase concentrations on an adsorption curve and a desorption curve respectively in mg/kg; HI$\leq$0 indicates that desorption hysteresis is not obvious, HI>0 indicates that a desorption process exhibits hysteresis, and the larger HI is, the more obvious the desorption hysteresis is, and the more difficult a desorption process of an adsorbate is; and

3) solid loading amount:

$$Q_I = Q_e - Q_d \quad (3)$$

wherein $Q_I$ is a solid loading amount of pollutants on a solid phase after an adsorption-desorption cycle, in mg/kg, $Q_e$ is the solid phase concentration in mg/kg at adsorption equilibrium, and $Q_d$ is a desorption amount in mg/kg.

6. The method for efficiently removing bisphenol pollutants from a water body according to claim 4, wherein step D1 of computing an optimal compounding ratio of each of the three types of biochar materials by means of a linear programming algorithm further comprises step D1-1:

computing total mass z of the biochar after compounding the three types of materials according to a functional relation between a total volume V of the wastewater to be treated and the concentrations of BPA and TBBPA as well as a total solid loading amount QI:

$$\text{mass M of pollutants BPA and TBBPA} = \text{pollutant concentration} * \text{volume of wastewater}$$

$$(4)$$

total mass z of biochar needed for treating wastewater = total mass M of pollutant /solid loading amount $Q_l$ per unit of material (5)

setting mass percentages of BC, BBC and $BC@Fe_3O_4$ dosages to be $X_1$, $X_2$, and $X_3$ respectively, wherein coefficients of $X_1$, $X_2$, and $X_3$ are the adsorption amounts or desorption amounts of BPA and TBBPA obtained when each of the three types of biochar materials is tested independently, and constraint conditions are: the adsorption amount of the biochar with a compounding ratio of the three types of materials is not less than a minimum adsorption amount of each kind of biochar, and the desorption amount of the biochar with the compounding ratio of the three types of materials is not greater than a maximum desorption amount of each kind of biochar, which is specifically expressed as:

$$\text{Min } z = X_1*BC+X_2*BBC+X_3*BC@Fe_3O_4 \qquad (6)$$

$$\text{s.t. } 193.64X_1+3142.17X_2+315.1X_3 \geq 193.64$$

$$441.09X_1+15681.87X_2+874.1X_3 \geq 441.09$$

$$964.28X_1+41053.17X_2+1461.6X_3 \geq 964.28$$

$$210.61X_1+3689.24X_2+701.53X_3 \geq 210.61$$

$$552.94X_1+8119.98X_2+2712.05X_3 \geq 552.94$$

$$1941.31X_1+13650.96X_2+7743.68X_3 \geq 1941.31$$

$$35.4X_1+63.37X_2+28.15X_3 \leq 63.37$$

$$113.1X_1+1070.56X_2+218.21X_3 \leq 1070.56$$

$$318.5X_1+8137.16X_2+608.06X_3 \leq 8137.16$$

wherein, $0 \leq X_1, X_2, X_3 \leq 1$.

7. The method for efficiently removing bisphenol pollutants from a water body according to claim 6, wherein step D1 further comprises step D1-2:

computing the percentage coefficients of BC, BBC and $BC@Fe_3O_4$ dosages to obtain $X_1$, $X_2$ and $X_3$ respectively by means of linear programming, and computing, according to the following equations (7), (8) and (9), ratios of BC350, BC500, BC650 and BC800 constituting mass $X_1*BC$;
where the step that ratios of BC350, BC500, BC650 and BC800 constituting mass $X_1*BC$ are computed includes:

setting mass percentages of the biochar, constituting the mass $X_1*BC$, at different temperatures to be $\alpha_1$, $\alpha_2$, $\alpha_3$, $\alpha_4$ respectively, wherein coefficients of $\alpha_1$, $\alpha_2$, $\alpha_3$, $\alpha_4$ are adsorption amounts or desorption amounts of BPA and TBBPA obtained when the biochar at each temperature is tested independently, and constraint conditions are: the adsorption amount of the biochar with a compounding ratio of different temperatures is not less than a minimum adsorption amount of the biochar at each temperature, and the desorption amount of the biochar with a compounding ratio of four temperatures is not greater than a maximum desorption amount of the biochar at each temperature, which is specifically expressed as:

$$X_1 = \alpha_1 * BC350 + \alpha_2 * BC500 + \alpha_3 * BC650 + \alpha_4 * BC800 \quad (7)$$

$$\text{s.t. } 193.64\alpha_1 + 122.2\alpha_2 + 241.23\alpha_3 + 786.7\alpha_4 \geq 122.2$$

$$441.09\alpha_1 + 265.34\alpha_2 + 507.92\alpha_3 + 1933.4\alpha_4 \geq 265.34$$

$$964.28\alpha_1 + 549.02\alpha_2 + 838.85\alpha_3 + 2573.69\alpha_4 \geq 549.02$$

$$210.61\alpha_1 + 160.02\alpha_2 + 65.94\alpha_3 + 198.90\alpha_4 \geq 65.94$$

$$552.95\alpha_1 + 349.74\alpha_2 + 136.71\alpha_3 + 564.92\alpha_4 \geq 136.71$$

$$1941.31\alpha_1 + 616.68\alpha_2 + 294.00\alpha_3 + 1102.68\alpha_4 \geq 294$$

$$35.4\alpha_1 + 60.2\alpha_2 + 26.9\alpha_3 + 9.2\alpha_4 \leq 60.2$$

$$113.1\alpha_1 + 115.1\alpha_2 + 97.3\alpha_3 + 150.5\alpha_4 \leq 150.5$$

$$318.5\alpha_1 + 226.5\alpha_2 + 218.4\alpha_3 + 177.8\alpha_4 \leq 318.5$$

wherein $0 \leq \alpha1, \alpha2, \alpha3, \alpha4 \leq 1$;
the step that ratios of BBC350, BBC500, BBC650 and BBC800 constituting mass $X_2 * BBC$ are computed includes:

setting mass percentages of different ball-milled modified biochar constituting mass $X_2 * BBC$ to be $\beta_1$, $\beta_2$, $\beta_3$, and $\beta_4$ respectively, wherein coefficients of $\beta_1$, $\beta_2$, $\beta_3$, and $\beta_4$ are the adsorption amounts or desorption amounts of BPA and TBBPA obtained when each ball-milled modified biochar is tested independently, and constraint conditions are: the adsorption amount of the biochar with a compound ratio of different ball-milled modified biochar is not less than a minimum adsorption amount of each kind of ball-milled modified biochar, and the desorption amount of the biochar with a compound ratio of four kinds of ball-milled modified biochar is not greater than a maximum desorption amount of each kind of ball-milled modified biochar, which is specifically expressed as:

$$X_2 = \beta_1*BBC350+\beta_2*BBC500+\beta_3*BBC650+\beta_4*BBC800 \quad (8)$$

$$\text{s.t. } 3142.17\beta_1+3173.73\beta_2+1997.72\beta_3+1972.79\beta_4 \geq 1972.79$$

$$15681.87\beta_1+16347.07\beta_2+7584.39\beta_3+8726.9\beta_4 \geq 7584.39$$

$$41053.17\beta_1+34341.04\beta_2+12774.12\beta_3+13838.92\beta_4 \geq 12774.12$$

$$3689.24\beta_1+3896.88\beta_2+3742.634\beta_3+3781.39\beta_4 \geq 3689.24$$

$$8119.98\beta_1+11870.88\beta_2+9006.54\beta_3+11352.99\beta_4 \geq 8119.98$$

$$13650.96\beta_1+29539.55\beta_2+13380.15\beta_3+20384.79\beta_4 \geq 13380.15$$

$$63.37\beta_1+17.22\beta_2+34.87\beta_3+13.34\beta_4 \leq 63.37$$

$$1070.56\beta_1+791.15\beta_2+803.56\beta_3+574.62\beta_4 \leq 1070.56$$

$$8137.16\beta_1+6277.06\beta_2+2594.01\beta_3+2392.41\beta_4 \leq 8137.16$$

wherein $0 \leq \beta_1, \beta_2, \beta_3, \beta_4 \leq 1$;
the step that ratios of BC350@$Fe_3O_4$, BC500@$Fe_3O_4$, BC650@$Fe_3O_4$ and BC800@$Fe_3O_4$ constituting mass $X_3$*BC@$Fe_3O_4$ are computed includes:

setting mass percentages of different iron oxide modified biochar constituting mass $X_3$*BC@$Fe_3O_4$ to be $\gamma_1, \gamma_2, \gamma_3$, and $\gamma_4$ respectively, wherein coefficients of $\gamma_1, \gamma_2, \gamma_3$, and $\gamma_4$ are the adsorption amounts or desorption amounts of BPA and TBBPA obtained when each iron oxide modified biochar is tested independently, and constraint conditions are: the adsorption amount of the biochar with a compound ratio of different iron oxide modified biochar is not less than a minimum adsorption amount of each kind of iron oxide modified biochar, and the desorption amount of the biochar with a compound ratio of four types of iron oxide modified biochar is not greater than a maximum desorption amount of each kind of iron oxide modified biochar, which is specifically expressed as:

$$X_3=\gamma_1*BC350@Fe_3O_4+\gamma_2*BC500@Fe_3O_4+\gamma_3*BC650@Fe_3O_4+\gamma_4*BC800@Fe_3O_4 \quad (9)$$

$$\text{s.t. } 315.1\gamma_1+57.8\gamma_2+94.48\gamma_3+346.43\gamma_4 \geq 57.8$$

$$874.1\gamma_1+126.5\gamma_2+191.59\gamma_3+705.65\gamma_4 \geq 126.5$$

$$1461.6\gamma_1+301.41\gamma_2+285.78\gamma_3+1002.66\gamma_4 \geq 285.78$$

$$701.53\gamma_1+857.5\gamma_2+53.00\gamma_3+216.69\gamma_4 \geq 53$$

$$2712.05\gamma_1+2469.51\gamma_2+1761.72\gamma_3+1786.25\gamma_4 \geq 1761.72$$

$$7743.68\gamma_1+4722.09\gamma_2+4454.56\gamma_3+3631.57\gamma_4 \geq 3631.57$$

$$28.15\gamma_1+23.17\gamma_2+43.75\gamma_3+40.43\gamma_4 \leq 43.75$$

$$218.21\gamma_1+61.23\gamma_2+129.33\gamma_3+203.86\gamma_4 \leq 218.21$$

$$608.06\gamma_1+224.69\gamma_2+214.16\gamma_3+437.16\gamma_4 \leq 608.06$$

wherein $0 \leq \gamma1, \gamma2, \gamma3, \gamma4 \leq 1$.

**Patentansprüche**

1. - Verfahren zum effizienten Entfernen von Bisphenol-Schadstoffen aus einem Wasserkörper, umfassend:

   A: Herstellen von drei Arten von Biokohlematerialien, nämlich Biokohle (BC), kugelgemahlene modifizierte Biokohle (BBC) und mit Eisenoxid modifizierte Biokohle (BC@Fe$_3$O$_4$);
   B: Berechnen von maximalen Feststoffbeladungsmengen pro Gewichtseinheit der drei Typen von Material separat für die verschiedenen Bisphenol-Schadstoffe in Abwasser;
   C, Messen des Gehalts der verschiedenen Bisphenol-Schadstoffe separat in einer Abwasserprobe;
   D, Berechnen eines optimalen Mischungsverhältnisses von jeder der drei Arten von Biokohlematerialien mittels eines linearen Programmieralgorithmus, unter Verwendung eines minimalen Gesamtgewichts des aus BC, BBC und BC@Fe$_3$O$_4$ zusammengesetzten Materials nach Mischen als Zielfunktion und einer maximalen Feststoffbeladungsmenge, die nicht geringer ist als der Gehalt an Bisphenol-Schadstoffen in der Abwasserprobe, als Einschränkungsbedingung; und
   E, Abwiegen entsprechender Gewichte der entsprechenden Biokohlematerialien entsprechend den optimalen Mischungsverhältnissen, gleichförmiges Mischen, um ein gemischtes Biokohlematerial herzustellen, und Hinzufügen des Materials zu dem Abwasser, um die Bisphenol-Schadstoffe synchron zu entfernen.

2. - Verfahren zum effizienten Entfernen von Bisphenol-Schadstoffen aus einem Wasserkörper nach Anspruch 1, wobei Schritt A ferner Folgendes umfasst:

   A1, Herstellen von drei Typen von zwölf Arten von Biokohlematerialien, insbesondere Herstellen von vier Arten von Biokohle durch Pyrolyse von Sägemehl-Biomasse in einer Stickstoff-Atmosphäre bei 350 °C, 500 °C, 650 °C und 800 °C über jeweils 4 Stunden, und entsprechendes Kennzeichnen der vier Arten von Biokohle als BC350, BC500, BC650 und BC800;
   Einbringen von BC350, BC500, BC650 sowie BC800 und Achatmahlkugeln in Kugelmahlbehälter, deren separates Mahlen, um unregelmäßige Partikel zu erlangen, und Kennzeichnen der entsprechend erlangten kugelgemahlenen modifizierten Biokohle jeweils als BBC350, BBC500, BBC650 und BBC800; und
   Durchführen von Eisenoxidmodifikation an BC350, BC500, BC650 und BC800 und Kennzeichnen von erlangter mit Eisenoxid modifizierter Biokohle als BC350@Fe$_3$O$_4$, BCS00@Fe$_3$O$_4$, BC650@Fe$_3$O$_4$ und BC800@Fe$_3$O$_4$.

3. - Verfahren zum effizienten Entfernen von Bisphenol-Schadstoffen aus einem Wasserkörper nach Anspruch 2, wobei Schritt A1 gemäß einem Massenverhältnis ferner Folgendes umfasst:

   A1-1, Durchführen von Biomassevorbehandlung:
   waschen der Sägemehl-Biomasse mit sauberem Wasser, um an der Biomasse haftende Schadstoffe zu entfernen; und Einbringen der gewaschenen Biomasse in einen Ofen zum Trocknen bei 30 °C-40 °C und Sieben der getrockneten Biomasse mit einem 80-Mesh-Sieb zur Verwendung;
   A1-2, Herstellen von Biokohle (BC):
   Umhüllen einer festgelegten Menge an Biomasse mit Zinnpapier, deren Einbringen in Muffelöfen und Einleiten von Stickstoff in die Muffelöfen über 30 Minuten, um Luft abzuziehen; Festlegen von jeweils 150 °C als Temperaturintervall, Abkühlen der Muffelöfen auf Raumtemperatur, wenn Pyrolyse bei 350 °C, 500 °C, 650 °C und 800 °C separat über 4 Stunden in der Stickstoffatmosphäre durchgeführt wird, Entnehmen der bei jeder Temperatur hergestellten Biokohle, Mahlen der Biokohle und gleichförmiges Sieben der Biokohle mit 100-Mesh-Sieben zur Verwendung, um Biokohle mit vier verschiedenen Herstellungstemperaturen zu erlangen; und entsprechend der Zubereitungstemperaturen, Kennzeichnen der Biokohle jeweils als BC350, BC500, BC650 und BC800;
   A1-3, Herstellen von kugelgemahlener modifizierter Biokohle (BBC):
   Abwiegen von 1 g Biokohle und 100 g Achatmahlkugeln in einen Kugelmahlbehälter und deren gleichförmiges Mischen; Mahlen der Biokohle bei 300 U/min über 12 Std und spezifisch über 6 Std im Uhrzeigersinn und über 6 Std gegen den Uhrzeigersinn mit einem zwischenliegenden Intervall von 1 Std in einem gesamten Prozess; und separates Markieren der erlangten kugelgemahlenen modifizierten Biokohle als BBC350, BBC500, BBC650, BBC800; und
   A1-4, Herstellen von mit Eisenoxid modifizierter Biokohle (BC@Fe$_3$O$_4$) :
   Abwiegen von 300 ml entionisiertes Wasser in einen 500-ml-Dreihalskolben und Einleiten von Stickstoff über 30 Min bei Raumtemperatur, um Luft im Dreihalskolben abzuziehen; Abwiegen von 4,4903 g von $FeCl_3 \cdot 6H_2O$ und 2,3074 g von $FeSQ_4 \cdot 7H_2$ unter Luftabschluss in den Dreihalskolben und Rühren bei Raumtemperatur, bis sie sich aufgelöst haben, um eine Mischlösung zu erlangen; Abwiegen von 1,925 g Biokohle in die Mischlösung, deren Rühren 30 Min bei Raumtemperatur rühren und dann kontinuierliches tropfenweises Hinzufügen von 10 M NaOH in die Mischlösung geben, bis der pH der Mischlösung 10-11 ist und ein schwarzer Niederschlag erzeugt ist; Durchführen von Rühren bei Raumtemperatur mit 50 U/min über 1 Std bis Präzipitation abgeschlossen ist, dann Stehenlassen bei Raumtemperatur über 3 Std -4 Std, und Trennung des schwarzen Präzipitats $BC@Fe_3O_4$ mittels eines Magneten oder Saugfiltration; fünfmaliges Waschen des abgetrennten $BC@Fe_3O_4$ mit Reinstwasser und dreimal mit absolutem Ethanol und Vakuumtrocknen des $BC@Fe_3O_4$ zur Verwendung; und Kennzeichnen der mit Eisenoxid modifizierten Biokohle separat als $BC350@Fe_3O_4$, $BC500@Fe_3O_4$, $BC650@Fe_3O_4$, $BC800@Fe_3O_4$.

4. - Verfahren zum effizienten Entfernen von Bisphenol-Schadstoffen aus einem Wasserkörper nach Anspruch 2, ferner umfassend:

B1, separates Messen und Berechnen der maximalen Feststoffbeladungsmengen von Bisphenol A (BPA) und Tetrabromobisphenol A (TBBPA) pro Gewichtseinheit der drei Typen von zwölf Arten von Materialien in dem Abwasser, und wobei die maximalen Feststoffbeladungsmengen als Parameter zum Bestimmung der Einschränkungsbedingungen der Materialien bei linearem Programmieren verwendet werden;

C1, separates Messen des Gehalts an BPA und TBBPA in der Abwasserprobe;

D1, Berechnen eines optimalen Mischungsverhältnisses von jeder der drei Typen von Biokohlematerialien mittels eines linearen Programmieralgorithmus und unter Verwendung eines minimalen Gesamtgewichts des Materials, das aus mindestens drei der drei Typen von zwölf Arten von Biokohlematerialien nach Mischen besteht, als Zielfunktion und Nehmen einer maximalen gesamten Feststoffbeladungsmenge von nicht weniger als der Gehalt an BPA und TBBPA in der Abwasserprobe als Einschränkungsbedingung; und

E1, Abwiegen entsprechender Gewichte der drei Typen von zwölf Arten von Biokohlematerialien jeweils gemäß den optimalen Mischungsverhältnissen, deren gleichförmiges Mischen zum Herstellen eines Biokohleverbundmaterials und Hinzufügen des Biokohleverbundmaterials zu dem Abwasser, um BPA und TBBPA aus dem Wasserkörper zu entfernen.

5. - Verfahren zum effizienten Entfernen von Bisphenol-Schadstoffen aus einem Wasserkörper nach Anspruch 4, wobei in Schritt B1

ein Verfahren zum Messen und Berechnen Bisphenol-Schadstoffe, die fest auf das Biokohlematerial geladen sind, Folgendes umfasst:

1) theoretische maximale Feststoffphasen-Adsorptionsmenge:

$$Q_e = K_L \cdot Q_{max} \cdot C_e / (1 + K_L \cdot C_e) \qquad (1)$$

wobei $Q_e$ eine Festphasenkonzentration in mg/kg bei Adsorptionsgleichgewicht ist, $C_e$ eine Flüssigphasenkonzentration in mg/l bei Adsorptionsgleichgewicht ist, $K_L$ ein Adsorptionskoeffizient eines Langmuir-Modells in mg/l ist und $Q_{max}$ die Adsorptionskapazität des Langmuir-Modells in mg/kg ist;

2) Desorption-Hysteresekoeffizient:

$$HI = (Q_{desorp} - Q_{sorp}) / Q_{sorp} \quad (2)$$

wobei $Q_{sorp}$ und $Q_{desorp}$ Festphasenkonzentrationen auf jeweils einer Adsorptionskurve und einer Desorptionskurve in mg/kg sind; $HI \leq 0$ angibt, dass Desorptionshysterese nicht offensichtlich ist, $HI > 0$ angibt, dass ein Desorptionsprozess eine Hysterese aufweist, und je größer $HI$ ist, desto offensichtlicher ist die Desorptionshysterese, und desto schwieriger ist ein Desorptionsprozess eines Adsorbats; und

3) Feststoffbeladungsmenge:

$$Q_I = Q_e - Q_d \qquad (3)$$

wobei $Q_I$ eine Feststoffbeladungsmenge von Schadstoffen an einer festen Phase nach einem Adsorptions-Desorptions-Zyklus in mg/kg ist, $Q_e$ die Festphasenkonzentration in mg/kg bei Adsorptionsgleichgewicht ist und $Q_d$ eine Desorptionsmenge in mg/kg ist.

**6.** - Verfahren zum effizienten Entfernen von Bisphenol-Schadstoffen aus einem Wasserkörper nach Anspruch 4, wobei Schritt D1 eines Berechnens eines optimalen Mischungsverhältnisses jeder der drei Typen von Biokohlematerialien mittels eines linearen Programmieralgorithmus ferner Schritt D1-1 umfasst:

Berechnung einer Gesamtmasse z der Biokohle nach Mischen der drei Typen von Material gemäß einer funktionalen Beziehung zwischen dem Gesamtvolumen V des zu behandelnden Abwassers und den Konzentrationen von BPA und TBBPA sowie einer Feststoffbeladungsmenge $Q_l$:

Masse M von Schadstoffen BPA und TBBPA= Schadstoffkonzentration * Abwasservolumen (4)

Gesamtmasse z an Biokohle, die zum Behandeln von Abwasser erforderlich ist = Gesamtmasse M an Schadstoff / Feststoffbeladungsmenge $Q_l$ pro Materialeinheit (6)

Festlegen von Massenprozentsätzen von BC-, BBC- und BC@$Fe_3O_4$-Dosierungen als $X_1$, $X_2$ und $X_3$, wobei Koeffizienten von $X_1$, $X_2$ und $X_3$ die Adsorptions- oder Desorptionsmengen von BPA und TBBPA sind, die erlangt werden, wenn jede der drei Typen von Biokohlematerialien unabhängig getestet wird, und die Einschränkungsbedingungen wie folgt sind: die Adsorptionsmenge der Biokohle mit einem Mischungsverhältnis der drei Typen von Materialien ist nicht geringer als eine Mindestadsorptionsmenge jeder Art von Biokohle, und die Desorptionsmenge der Biokohle mit dem Mischungsverhältnis der drei Typen von Materialien ist nicht größer als eine maximale Desorptionsmenge jeder Art von Biokohle, die spezifisch ausgedrückt wird als:

```
Min z = X₁*BC+X₂*BBC+X₃*BC@Fe₃O₄          (6)
s.t. 193,64X₁+3142,17X₂+315,1X₃ ≥ 193,64
441,09X₁+15681,87X₂+874,1X₃ ≥ 441,.09
964,28X₁+41053,17X₂+1461,6X3 ≥ 964,28
210,61X₁+3689,24X₂+701,53X3 ≥ 210,61
552,94X₁+8119,98X₂+2712,05X3 ≥ 552,94
1941,31X₁+13650,96X₂+7743,68X3 ≥ 1941,31
35,4X₁+63,37X₂+28,15X₃ ≤ 63,37
113,1X₁+1070,56X₂+218,21X₃ ≤ 1070,56
318,5X₁+8137,16X₂+608,06X₃ ≤ 8137,16
```

wobei $0 \le X_1$, $X_2$, $X_3 \le 1$.

**7.** - Verfahren zum effizienten Entfernen von Bisphenol-Schadstoffen aus einem Wasserkörper nach Anspruch 6, wobei Schritt D1 ferner Schritt D1-2 umfasst:

Berechnung der prozentualen Koeffizienten von BC-, BBC- und BC@$Fe_3O_4$-Dosierungen, um jeweils $X_1$, $X_2$ und $X_3$ durch lineares Programmieren zu erlangen, und Berechnen, gemäß der folgenden Gleichungen (7), (8) und (9), der Verhältnisse von BC350, BC500, BC650 und BC800, die eine Masse $X_1$*BC darstellen;
wobei der Schritt, der die Verhältnisse von BC350, BC500, BC650 und BC800, die die Masse $X_1$ *BC darstellen, berechnet, Folgendes beinhaltet:

Festlegen von Massenanteilen der Biokohle, die die Masse $X_1$*BC darstellen, bei verschiedenen Temperaturen jeweils als $\alpha_1$, $\alpha_2$, $\alpha_3$ und $\alpha_4$, wobei Koeffizienten von $\alpha_1$, $\alpha_2$, $\alpha_3$ $\alpha_4$ Adsorptionsmengen oder Desorptionsmengen von BPA und TBBPA sind, die erlangt werden, wenn die Biokohle bei jeder Temperatur unabhängig getestet wird, und die Einschränkungsbedingungen wie folgt sind: die Adsorptionsmenge der Biokohle mit einem Mischungsverhältnis von verschiedenen Temperaturen ist nicht geringer als eine minimale Adsorptionsmenge der Biokohle bei jeder Temperatur, und die Desorptionsmenge der Biokohle mit einem Mischungsverhältnis von vier Temperaturen ist nicht größer als eine maximale Desorptionsmenge der Biokohle bei jeder Temperatur, die spezifisch ausgedrückt ist als:

$$X_1 = \alpha_1*BC350+\alpha_2*BC500+\alpha_3*BC650+\alpha_4*BC800 \quad (7)$$

$$s.t. \quad 193,64\alpha_1+122,2\alpha_2+241,23\alpha_3+786,7\alpha_4 \geq 122,2$$

$$441,09\alpha_1+265,34\alpha_2+507,92\alpha_3+1933,4\alpha_4 \geq 265,34$$

$$964,28\alpha_1+549,02\alpha_2+838,85\alpha_3+2573,69\alpha_4 \geq 549,02$$

$$210,61\alpha_1+160,02\alpha_2+65,94\alpha_3+198,90\alpha_4 \geq 65,94$$

$$552,95\alpha_1+349,74\alpha_2+136,71\alpha_3+564,92\alpha_4 \geq 136,71$$

$$1941,31\alpha_1+616,68\alpha_2+294,00\alpha_3+1102,68\alpha_4 \geq 294$$

$$35,4\alpha_1+60,2\alpha_2+26,9\alpha_3+9,2\alpha_4 \leq 60,2$$

$$113,1\alpha_1+115,1\alpha_2+97,3\alpha_3+150,5\alpha_4 \leq 150,5$$

$$318,5\alpha_1+226,5\alpha_2+218,4\alpha_3+177,8\alpha_4 \leq 318,5$$

wobei $0 \leq \alpha_1, \alpha_2, \alpha_3, \alpha_4 \leq 1$;
der Schritt, der die Verhältnisse von BBC350, BBC500, BBC650 und BBC800 berechnet, die die Masse $X_2*BBC$ bilden, Folgendes beinhaltet:

Festlegen von Massenanteilen verschiedener kugelgemahlener modifizierter Biokohle, die die Masse $X_2*BBC$ darstellen, jeweils als $\beta_1, \beta_2, \beta_3$ und $\beta_4$, wobei die Koeffizienten $\beta_1, \beta_2, \beta_3$ und $\beta_4$ die Adsorptions- oder Desorptionsmengen von BPA und TBBPA sind, die erlangt werden, wenn jede kugelgemahlene modifizierte Biokohle unabhängig getestet wird, und die Einschränkungsbedingungen wie folgt sind: die Adsorptionsmenge der Biokohle mit einem Mischungsverhältnis verschiedener kugelgemahlener modifizierter Biokohle nicht geringer ist als eine Mindestadsorptionsmenge jeder Art von kugelgemahlener modifizierter Biokohle, und die Desorptionsmenge der Biokohle mit einem Mischungsverhältnis von vier Arten von kugelförmig gemahlener modifizierter Biokohle nicht größer ist als eine maximale Desorptionsmenge jeder Art von kugelförmig gemahlener modifizierter Biokohle, die spezifisch ausgedrückt wird als:

$$X_2 = \beta_1*BBC350+\beta_2*BBC500+\beta_3*BBC650+\beta_4*BBC800 \quad (8)$$

$$s.t. \quad 3142,17\beta_1+3173,73 \ \beta_2+1997,72\beta_3+1972,79\beta_4 \geq 1972,79$$

$$15681,87\beta_1+ 16347,07\beta_2+7584,39\beta_3+8726,9\beta_4 \geq 7584,39$$

$$41053,17\beta_1+34341,04\beta_2+12774,12\beta_3+13838,92\beta_4 \geq 12774,12$$

$$3689,24\beta_1+3896,88\beta_2+3742,634\beta_3+3781,39\beta_4 \geq 3689,24$$

$$8119,98\beta_1+11870,88\beta_2+9006,54 \ 3+11352,99\beta_4 \geq 8119,98$$

$$13650,96\beta_1+29539,55\beta_2+13380,15\beta_3+20384,79\beta_4 \geq 13380,15$$

$$63,37\beta_1+17,22\beta_2+34,87\beta_3+13,34\beta_4 \leq 63,37$$

$$1070,56\beta_1+791,15\beta_2+803,56\beta_3+574,62\beta_4 \leq 1070,56$$

$$8137,16\beta_1+6277,06\beta_2+2594,01\beta_3+2392,41\beta_4 \leq 8137,16$$

wobei: $0 \leq \beta_1, \beta_2, \beta_3, \beta_4 \leq 1$;
der Schritt, der die Verhältnisse von $BC350@Fe_3O_4$, $BC500@Fe_3O_4$, $BC650@Fe_3O_4$ und

BC800@Fe$_3$O$_4$ berechnet, die die Masse X3*BC@Fe$_3$O$_4$ darstellen, Folgendes beinhaltet:

Festlegen von Massenanteilen verschiedener mit Eisenoxid modifizierter Biokohle, die die Masse X$_3$*BC@Fe$_3$Q$_4$ bilden, jeweils als $\gamma_1$, $\gamma_2$, $\gamma_3$ und $\gamma_4$, wobei die Koeffizienten $\gamma_1$, $\gamma_2$, $\gamma_3$ und $\gamma_4$ die Adsorptions- oder Desorptionsmengen von BPA und TBBPA sind, die erlangt werden, wenn jede mit Eisenoxid modifizierte Biokohle unabhängig getestet wird, und die Einschränkungsbedingungen wie folgt sind: die Adsorptionsmenge der Biokohle mit einem Mischungsverhältnis verschiedener mit Eisenoxid modifizierter Biokohle nicht geringer ist als eine Mindestadsorptionsmenge jeder Art von mit Eisenoxid modifizierter Biokohle, und die Desorptionsmenge der Biokohle mit einem Mischungsverhältnis von vier Arten von mit Eisenoxid modifizierter Biokohle nicht größer ist als eine maximale Desorptionsmenge jeder Art von mit Eisenoxid modifizierter Biokohle, die spezifisch ausgedrückt wird als:

$$X_3 = \gamma_1 * BC350@Fe_3O_4 + \gamma_2 * BC500@Fe_3O_4 + \gamma_3 * BC650@Fe_3O_4 + \gamma_4 * BC800@Fe_3O_4 \quad (9)$$

$$\text{s.t. } 315,1\gamma_1 + 57,8\gamma_2 + 94,48\gamma_3 + 346,43\gamma_4 \geq 57,8$$

$$874,1\gamma_1 + 126,5\gamma_2 + 191,59\gamma_3 + 705,65\gamma_4 \geq 126,5$$

$$1461,6\gamma_1 + 301,41\gamma_2 + 285,78\gamma_3 + 1002,66\gamma_4 \geq 285,78$$

$$701,53\gamma_1 + 857,5\gamma_2 + 53,00\gamma_3 + 216,69\gamma_4 \geq 53$$

$$2712,05\gamma_1 + 2469,51\gamma_2 + 1761,72\gamma_3 + 1786,25\gamma_4 \geq 1761,72$$

$$7743,68\gamma_1 + 4722,09\gamma_2 + 4454,56\gamma_3 + 3631,57\gamma_4 \geq 3631,57$$

$$28,15\gamma_1 + 23,17\gamma_2 + 43,75\gamma_3 + 40,43\gamma_4 \leq 43,75$$

$$218,21\gamma_1 + 61,23\gamma_2 + 129,33\gamma_3 + 203,86\gamma_4 \leq 218,21$$

$$608,06\gamma_1 + 224,69\gamma_2 + 214,16\gamma_3 + 437,16\gamma_4 \leq 608,06$$

wobei $0 \leq \gamma_1$, $\gamma_2$, $\gamma_3$, $\gamma_4 \leq 1$.

## Revendications

1. - Procédé d'élimination efficace de polluants bisphénols à partir d'un corps aqueux, comprenant :

   A, préparer trois types de matériaux de biocharbon, à savoir le biocharbon (BC), le biocharbon modifié par broyage à billes (BBC) et le biocharbon modifié par de l'oxyde de fer (BC@Fe$_3$O$_4$) ;
   B, calculer séparément les quantités maximales de charge solide par unité de poids des trois types de matériaux pour les différents polluants bisphénols dans les eaux usées ;
   C, mesurer séparément les teneurs des différents polluants bisphénols dans un échantillon d'eaux usées ;
   D, calculer un rapport de mélange optimal de chacun des trois types de matériaux de biocharbon au moyen d'un algorithme de programmation linéaire, en utilisant un poids total minimal du matériau composé de BC, BBC et BC@Fe$_3$O$_4$ après mélange comme fonction objective et une quantité de charge solide totale maximale non inférieure à la teneur des polluants bisphénols dans l'échantillon d'eaux usées comme condition de contrainte ; et
   E, peser les poids correspondants des matériaux de biocharbon correspondants respectivement selon les rapports de mélange optimaux, les mélanger uniformément pour préparer un matériau de biocharbon mixte, et ajouter le matériau aux eaux usées pour éliminer les polluants bisphénols de manière synchrone.

2. - Procédé d'élimination efficace de polluants bisphénols à partir d'un corps aqueux, selon la revendication 1, dans lequel l'étape A comprend en outre :

   A1, préparer trois types de douze sortes de matériaux de biocharbon, en particulier, préparer quatre sortes de biocharbon par pyrolyse de biomasse de sciure dans une atmosphère d'azote à respectivement 350°C, 500°C, 650°C et 800°C pendant 4 heures, et marquer les quatre sortes de biocharbon comme BC350, BC500, BC650 et BC800 de façon correspondante ;

placer BC350, BC500, BC650 ainsi que BC800 et des billes de broyage en agate dans des cuves de broyage à billes, les broyer séparément pour obtenir des particules de forme irrégulière, et marquer le biocharbon modifié par broyage à billes obtenu de façon correspondante comme respectivement BBC350, BBC500, BBC650 et BBC800 ; et

effectuer une modification par de l'oxyde de fer sur BC350, BC500, BC650 et BC800, et marquer le biocharbon modifié par de l'oxyde de fer obtenu comme BC350@Fe$_3$O$_4$, BC500@Fe$_3$O$_4$, BC650@Fe$_3$O$_4$ et BC800@Fe$_3$O$_4$.

**3.** - Procédé d'élimination efficace de polluants bisphénols à partir d'un corps aqueux, selon la revendication 2, dans lequel, selon un rapport massique, l'étape A1 comprend en outre :

A1-1, effectuer un prétraitement de la biomasse :
laver la biomasse de sciure avec de l'eau propre pour éliminer les polluants attachés à la biomasse ; et placer la biomasse lavée dans un four pour la sécher à 30°C-40°C, et tamiser la biomasse séchée avec un tamis de 80 mesh d'ouverture de maille pour utilisation ;
A1-2, préparer le biocharbon (BC) :
envelopper une quantité déterminée de biomasse dans du papier d'étain, la placer dans des fours à moufle et introduire de l'azote dans les fours à moufle pendant 30 minutes pour évacuer l'air ; régler tous les 150°C comme intervalle de température, refroidir les fours à moufle à température ambiante lorsque la pyrolyse est effectuée à 350°C, 500°C, 650°C et 800°C séparément pendant 4 heures dans l'atmosphère d'azote, retirer le biocharbon préparé à chaque température, broyer le biocharbon et tamiser uniformément le biocharbon avec des tamis de 100 mesh d'ouverture de maille pour utilisation, de manière à obtenir du biocharbon avec quatre températures de préparation différentes ; et correspondant aux températures de préparation, marquer le biocharbon comme respectivement BC350, BC500, BC650 et BC800 ;
A1-3, préparer le biocharbon modifié par broyage à billes (BBC) :
peser 1 g de biocharbon et 100 g de billes de broyage en agate dans un réservoir de broyage à billes et mélanger uniformément ; broyer le biocharbon à 300 tr/min pendant 12 h, et plus précisément, faire tourner le biocharbon dans le sens horaire pendant 6 h et dans le sens antihoraire pendant 6 h avec un intervalle entre les deux étant d'1 heure dans l'ensemble du processus ; et marquer le biocharbon modifié par broyage à billes obtenu comme BBC350, BBC500, BBC650, BBC800 de façon séparée ; et
A1-4, préparation de biocharbon modifié par de l'oxyde de fer (BC@Fe$_3$O$_4$) :
peser 300 mL d'eau déionisée dans un ballon à trois cols de 500 mL et introduire de l'azote pendant 30 min à température ambiante pour évacuer l'air du ballon à trois cols ; peser 4,4903 g de FeCl$_3$•6H$_2$O et 2,3074 g de FeSO$_4$•7H$_2$O dans le ballon à trois cols avec l'air évacué, et agiter à température ambiante jusqu'à dissolution pour obtenir une solution mixte ; peser 1,925 g de biocharbon dans la solution mixte, agiter à température ambiante pendant 30 min, puis ajouter en continu du NaOH 10 M goutte à goutte dans la solution mixte jusqu'à ce que le pH de la solution mixte soit de 10-11 et qu'un précipité noir soit généré ; effectuer une agitation à température ambiante à 50 tr/min pendant 1 h jusqu'à ce que la précipitation soit complète, puis laisser reposer à température ambiante pendant 3 h à 4 h, et séparer le précipité noir BC@Fe$_3$O$_4$ au moyen d'un aimant ou d'une filtration par aspiration ; laver le BC@Fe$_3$O$_4$ séparé avec de l'eau ultrapure cinq fois et de l'éthanol absolu trois fois, et sécher sous vide BC@Fe$_3$O$_4$ pour utilisation ; et marquer le biocharbon modifié par de l'oxyde de fer obtenu comme BC350@Fe$_3$O$_4$, BC500@Fe$_3$O$_4$, BC650@Fe$_3$O$_4$, BC800@Fe$_3$O$_4$ de façon séparée.

**4.** - Procédé d'élimination efficace de polluants bisphénols à partir d'un corps aqueux, selon la revendication 2, comprenant en outre :

B1, mesurer et calculer séparément les quantités maximales de charge solide de Bisphénol A (BPA) et de Tétrabromobisphénol A (TBBPA) par unité de poids des trois types de douze sortes de matériaux dans les eaux usées, et prendre les quantités maximales de charge solide comme paramètres pour déterminer les conditions de contrainte des matériaux dans la programmation linéaire ;
C1, mesurer séparément les teneurs en BPA et TBBPA dans l'échantillon d'eaux usées;
D1, calculer un rapport de mélange optimal de chacun des trois types de matériaux de biocharbon au moyen d'un algorithme de programmation linéaire et en prenant un poids total minimal du matériau composé d'au moins trois des trois types de douze sortes de matériaux de biocharbon après mélange comme fonction objective et en prenant une quantité totale maximale de charge solide non inférieure aux teneurs en BPA et TBBPA dans l'échantillon d'eaux usées comme condition de contrainte ; et
E1, peser les poids correspondants des trois types de douze sortes de matériaux de biocharbon respectivement selon les rapports de mélange optimaux, mélanger uniformément pour préparer un matériau de biocharbon mélangé et ajouter le matériau de biocharbon mélangé aux eaux usées pour éliminer le BPA et le TBBPA à partir du corps aqueux.

**5.** - Procédé d'élimination efficace de polluants bisphénols à partir d'un corps aqueux, selon la revendication 4, dans lequel à l'étape B1,

un procédé de mesure et de calcul des polluants bisphénols chargés à l'état solide sur le matériau de biocharbon comprend :

1) quantité maximale théorique d'adsorption en phase solide :

$$Q_e = K_L \cdot Q_{max} \cdot C_e / (1 + K_L \cdot C_e) \quad (1)$$

dans laquelle $Q_e$ est une concentration en phase solide en mg/kg à l'équilibre d'adsorption, $C_e$ est une concentration en phase liquide en mg/L à l'équilibre d'adsorption, $K_L$ est un coefficient d'adsorption d'un modèle de Langmuir en mg/L, et $Q_{max}$ est la capacité d'adsorption du modèle de Langmuir en mg/kg ;
2) coefficient d'hystérésis de désorption :

$$HI = (Q_{desorb} - Q_{sorb}) / Q_{sorb} \quad (2)$$

dans laquelle $Q_{sorb}$ et $Q_{desorb}$ sont les concentrations en phase solide sur respectivement une courbe d'adsorption et une courbe de désorption en mg/kg ; $HI \leq 0$ indique que l'hystérésis de désorption n'est pas évidente, $HI > 0$ indique qu'un processus de désorption présente une hystérésis, et plus HI est grand, plus l'hystérésis de désorption est évidente, et plus le processus de désorption d'un adsorbat est difficile ; et
3) quantité de charge solide :

$$Q_I = Q_e - Q_d \quad (3)$$

dans laquelle $Q_I$ est une quantité de charge solide de polluants sur une phase solide après un cycle d'adsorption-désorption, en mg/kg, $Q_e$ est la concentration de la phase solide en mg/kg à l'équilibre d'adsorption, et $Q_d$ est une quantité de désorption en mg/kg.

**6.** - Procédé d'élimination efficace de polluants bisphénols à partir d'un corps aqueux, selon la revendication 4, dans lequel l'étape D1 de calcul d'un rapport de mélange optimal de chacun des trois types de matériaux de biocharbon au moyen d'un algorithme de programmation linéaire comprend en outre l'étape D1-1 :

calculer la masse totale z du biocharbon après mélange des trois types de matériaux selon une relation fonctionnelle entre un volume total V des eaux usées à traiter et les concentrations de BPA et TBBPA ainsi qu'une quantité totale de charge solide $Q_I$ :

masse M de polluants BPA et TBBPA = concentration de polluant * volume d'eaux usées $\qquad$ (4)

masse totale z de biocharbon nécessaire au traitement des eaux usées = masse totale M de polluant / quantité de charge solide $Q_I$ par unité de matériau $\qquad$ (5)

définir des pourcentages massiques des dosages BC, BBC et $BC@Fe_3O_4$ comme respectivement $X_1$, $X_2$ et $X_3$, où les coefficients de $X_1$, $X_2$ et $X_3$ sont les quantités d'adsorption ou les quantités de désorption de BPA et TBBPA obtenues lorsque chacun des trois types de matériaux de biocharbon est testé indépendamment, et les conditions de contrainte sont : la quantité d'adsorption du biocharbon avec un rapport de mélange des trois types de matériaux n'est pas inférieure à une quantité d'adsorption minimale de chaque sorte de biocharbon, et la quantité de désorption du biocharbon avec le rapport de mélange des trois types de matériaux n'est pas supérieure à une quantité de désorption maximale de chaque sorte de biocharbon, qui est spécifiquement exprimée comme :

```
Min z = X₁*BC+X₂*BBC+X₃*BC@Fe₃O₄ (6)
s.t. 193,64X₁+3142,17X₂+315,1X₃≥193,64
441,09X₁+15681,87X₂+874,1X₃≥441,09
964,28X₁+41053,17X₂+1461,6X₃≥964,28 <
210,61X₁+3689,24X₂+701,53X₃≥210,61
552,94X₁+8119,98X₂+2712,05X₃≥552,94
1941,31X₁+13650,96X₂+7743,68X₃≥1941,31
35,4X₁+63,37X₂+28,15X₃≤63,37
113,1X₁+1070,56X₂+218,21X₃≤1070,56
318,5X₁+8137,16X₂+608,06X₃≤8137,16
```

où $0 \le X_1$, $X_2$, $X_3 \le 1$.

7. - Procédé d'élimination efficace de polluants bisphénols à partir d'un corps aqueux, selon la revendication 6, dans lequel l'étape D1 comprend en outre l'étape D1-2 :

calculer les coefficients de pourcentage des dosages BC, BBC et BC@Fe₃O₄ pour obtenir respectivement $X_1$, $X_2$ et $X_3$ au moyen d'une programmation linéaire, et calculer, selon les équations suivantes (7), (8) et (9), les rapports de BC350, BC500, BC650 et BC800 constituant la masse $X_1$*BC ;
où l'étape de calcul des rapports de BC350, BC500, BC650 et BC800 constituant la masse $X_1$*BC comprend : fixer les pourcentages massiques du biocharbon, constituant la masse $X_1$*BC, à différentes températures, comme respectivement $\alpha_1$, $\alpha_2$, $\alpha_3$, $\alpha_4$, où les coefficients de $\alpha_1$, $\alpha_2$, $\alpha_3$, $\alpha_4$ sont les quantités d'adsorption ou les quantités de désorption de BPA et TBBPA obtenues lorsque le biocharbon à chaque température est testé indépendamment, et les conditions de contrainte sont : la quantité d'adsorption du biocharbon avec un rapport de mélange de différentes températures n'est pas inférieure à une quantité d'adsorption minimale du biocharbon à chaque température, et la quantité de désorption du biocharbon avec un rapport de mélange de quatre températures n'est pas supérieure à une quantité de désorption maximale du biocharbon à chaque température, qui est spécifiquement exprimée comme :

```
X₁=α₁*BC350+α₂*BC500+α₃*BC650+α₄*BC800 (7)

s.t. 193.64α₁+122,2α₂+241,23α₃+786,7α₄≥122,2
441,09α₁+265,34α₂+507,92α₃+1933,4α₄≥265,34
964,28α₁+549,02α₂+838,85α₃+2573,69α₄≥549,02
210,61α₁+160,02α₂+65,94α₃+198,90α₄≥65,94
552,95α₁+349,74α₂+136,71α₃+564,92α₄≥136,71
1941,31α₁+616,68α₂+294,00α₃+1102,68α₄≥294
35,4α₁+60,2α₂+26,9α₃+9,2α₄≤60,2
113,1α₁+115,1α₂+97,3α₃+150,5α₄≤150,5
318,5α₁+226,5α₂+218,4α₃+177,8α₄≤318,5
```

où $0 \le \alpha1$, $\alpha2$, $\alpha3$, $\alpha4 \le 1$ ;
l'étape de calcul des rapports de BBC350, BBC500, BBC650 et BBC800 constituant la masse $X_2$*BBC comprend :

fixer les pourcentages massiques de différents biocharbons modifiés par broyage à boulets constituant la masse $X_2$*BBC comme respectivement $\beta_1$, $\beta_2$, $\beta_3$ et $\beta_4$, où les coefficients de $\beta_1$, $\beta_2$, $\beta_3$ et $\beta_4$ sont les quantités d'adsorption ou de désorption de BPA et de TBBPA obtenues lorsque chaque biocharbon modifié par broyage à billes est testé indépendamment, et les conditions de contrainte sont : la quantité d'adsorption du biocharbon avec un rapport de mélange de différents biocharbons modifiés par broyage à billes n'est pas inférieure à une quantité d'adsorption minimale de chaque sorte de biocharbon modifié par broyage à billes, et la quantité de désorption du biocharbon avec un rapport de mélange de quatre sortes de biocharbon modifié par broyage à billes n'est pas supérieure à une quantité de désorption maximale de chaque sorte de biocharbon modifié par broyage à billes, qui s'exprime spécifiquement comme suit :

$$X_2=\beta_1*BBC350+\beta_2*BBC500+\beta_3*BBC650+\beta_4*BBC800 \quad (8)$$

$$s.t. \quad 3142,17\beta_1+3173,73\beta_2+1997,72\beta_3+1972,79\beta_4\geq1972,79$$

$$15681,87\beta_1+16347,07\beta_2+7584,39\beta_3+8726,9\beta_4\geq7584,39$$

$$41053,17\beta_1+34341,04\beta_2+12774,12\beta_3+13838,92\beta_4\geq12774,12$$

$$3689,24\beta_1+3896,88\beta_2+3742,634\beta_3+3781,39\beta_4\geq3689,24$$

$$8119,98\beta_1+11870,88\beta_2+9006,54\beta_3+11352,99\beta_4\geq8119,98$$

$$13650,96\beta_1+29539,55\beta_2+13380,15\beta_3+20384,79\beta_4\geq13380,15$$

$$63,37\beta_1+17,22\beta_2+34,87\beta_3+13,34\beta_4\leq63,37$$

$$1070,56\beta_1+791,15\beta_2+803,56\beta_3+574,62\beta_4\leq1070,56$$

$$8137,16\beta_1+6277,06\beta_2+2594,01\beta_3+2392,41\beta_4\leq8137,16$$

où $0 \leq \beta1$, $\beta2$, $\beta3$, $\beta4 \leq 1$ ;

l'étape de calcul des rapports de BC350@Fe$_3$O$_4$, BC500@Fe$_3$O$_4$, BC650@Fe$_3$O$_4$ et BC800@Fe$_3$O$_4$ constituant la masse $X_3$*BC@Fe$_3$O$_4$ comprend :

définir des pourcentages massiques de différents biocharbons modifiés par de l'oxyde de fer constituant la masse $X_3$*BC@Fe$_3$O$_4$ comme respectivement $\gamma_1$, $\gamma_2$, $\gamma_3$ et $\gamma_4$, où les coefficients de $\gamma_1$, $\gamma_2$, $\gamma_3$ et $\gamma_4$ sont les quantités d'adsorption ou de désorption de BPA et de TBBPA obtenues lorsque chaque biocharbon modifié par de l'oxyde de fer est testé indépendamment, et les conditions de contrainte sont : la quantité d'adsorption du biocharbon avec un rapport de mélange de différents biocharbons modifiés par de l'oxyde de fer n'est pas inférieure à une quantité d'adsorption minimale de chaque sorte de biocharbon modifié par de l'oxyde de fer, et la quantité de désorption du biocharbon avec un rapport de mélange de quatre types de biocharbons modifiés par de l'oxyde de fer n'est pas supérieure à une quantité de désorption maximale de chaque sorte de biocharbon modifié par de l'oxyde de fer, qui s'exprime spécifiquement comme suit :

$$X_3 = \gamma_1 * BC350@Fe_3O_4 + \gamma_2 * BC500@Fe_3O_4 + \gamma_3 * BC650@Fe_3O_4 + \gamma_4 * BC800@Fe_3O_4$$
(9)

s.t. $315,1\gamma_1 + 57,8\gamma_2 + 94,48\gamma_3 + 346,43\gamma_4 \geq 57,8$

$874,1\gamma_1 + 126,5\gamma_2 + 191,59\gamma_3 + 705,65\gamma_4 \geq 126,5$

$1461,6\gamma_1 + 301,41\gamma_2 + 285,78\gamma_3 + 1002,66\gamma_4 \geq 285,78$

$701,53\gamma_1 + 857,5\gamma_2 + 53,00\gamma_3 + 216,69y_4 \geq 53$

$2712,05\gamma_1 + 2469,51\gamma_2 + 1761,72\gamma_3 + 1786,25\gamma_4 \geq 1761,72$

$7743,68\gamma_1 + 4722,09\gamma_2 + 4454,56\gamma_3 + 3631,57\gamma_4 \geq 3631,57$

$28,15\gamma_1 + 23,17\gamma_2 + 43,75\gamma_3 + 40,43\gamma_4 \leq 43,75$

$218,21\gamma_1 + 61,23y_2 + 129,33\gamma_3 + 203,86\gamma_4 \leq 218,21$

$608,06\gamma_1 + 224,69\gamma_2 + 214,16\gamma_3 + 437,16\gamma_4 \leq 608,06$

où $0 \leq \gamma1, \gamma2, \gamma3, \gamma4 \leq 1$ .

EP 4 166 509 B1

Electronic image 1

Fig. 1

Full scale: 2249 cts Cursor: 0.000

Fig. 2

Fig. 3

Fig. 4

Fig. 5

Fig. 6

Fig. 7

Fig. 8

Fig. 9

Fig. 10

Fig. 11

Fig. 12

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109173994 A

- CN 113233573 A

**Non-patent literature cited in the description**

- Evaluation of sewage sludge biochar and modified derivatives as novel SPE adsorbents for monitoring of bisphenol A. **BIRER AYSE MULLA et al.** CHEMO-SPHERE. PERGAMON PRESS, 05 November 2020, vol. 268